(19) Europäisches Patentamt
European Patent Office
Office européen des brevets

(11) EP 4 144 795 A1

(12) EUROPEAN PATENT APPLICATION
published in accordance with Art. 153(4) EPC

(43) Date of publication:
**08.03.2023 Bulletin 2023/10**

(21) Application number: **20933507.4**

(22) Date of filing: **09.11.2020**

(51) International Patent Classification (IPC):
***C08L 23/12*** (2006.01) ***C08L 51/06*** (2006.01)
***B25G 1/12*** (2006.01)

(52) Cooperative Patent Classification (CPC):
**B25G 1/12; C08L 23/12; C08L 51/06**

(86) International application number:
**PCT/CN2020/127507**

(87) International publication number:
**WO 2021/218104 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:
**29.04.2020 CN 202010357817**
**29.04.2020 CN 202010357821**
**29.04.2020 CN 202010357842**
**29.04.2020 CN 202010357843**
**29.04.2020 CN 202010357844**
**29.04.2020 CN 202010357845**
**29.04.2020 CN 202010357846**
**29.04.2020 CN 202010357848**
**29.04.2020 CN 202010359046**
**29.04.2020 CN 202010359067**
**29.04.2020 CN 202010359070**
**29.04.2020 CN 202010359073**

(71) Applicants:
- **CHINA PETROLEUM & CHEMICAL CORPORATION**
  **Chaoyang District**
  **Beijing 100728 (CN)**
- **BEIJING RESEARCH INSTITUTE OF CHEMICAL INDUSTRY,**
  **CHINA PETROLEUM & CHEMICAL CORPORATION**
  **Chaoyang District**
  **Beijing 100013 (CN)**
- **Tsinghua University**
  **Haidian District**
  **Beijing 100084 (CN)**

(72) Inventors:
- **YUAN, Hao**
  **Beijing 100013 (CN)**
- **SONG, Wenbo**
  **Beijing 100013 (CN)**
- **HE, Jinliang**
  **Beijing 100084 (CN)**
- **SHAO, Qing**
  **Beijing 100013 (CN)**
- **LI, Qi**
  **Beijing 100084 (CN)**
- **ZHANG, Qi**
  **Beijing 100013 (CN)**
- **SHI, Hongwei**
  **Beijing 100013 (CN)**
- **LI, Juan**
  **Beijing 100013 (CN)**
- **WANG, Yutao**
  **Beijing 100013 (CN)**
- **HU, Jun**
  **Beijing 100084 (CN)**
- **ZHANG, Xiaomeng**
  **Beijing 100013 (CN)**
- **ZHOU, Yao**
  **Beijing 100084 (CN)**

(74) Representative: **Hoffmann Eitle**
**Patent- und Rechtsanwälte PartmbB**
**Arabellastraße 30**
**81925 München (DE)**

# (54) GRAFTING-MODIFIED POLYPROPYLENE MATERIAL AND PREPARATION METHOD THEREFOR

(57) The invention belongs to the field of polymers, and relates to a grafting-modified polypropylene material for an insulating material and preparation method thereof. The grafting-modified polypropylene material comprises structural units derived from a polypropylene copolymer and structural units derived from an alkenyl-con-



Processed by Luminess, 75001 PARIS (FR)

(Cont. next page)

taining polymerizable monomer; the content of the structural units derived from the alkenyl-containing polymerizable monomer and in a grafted state in the grafting-modified polypropylene material is 0.1 to 14 wt%; the polypropylene copolymer has at least one of the following characteristics: the comonomer content is 0.5 to 40 mol%; the content of xylene solubles is 2 to 80 wt%; the comonomer content in the xylene solubles is 10 to 70 wt%; the intrinsic viscosity ratio of the xylene solubles to the polypropylene copolymer is 0.3 to 5. The grafting-modified polypropylene material of the invention can give consideration to both mechanical property and electrical property at a higher working temperature.

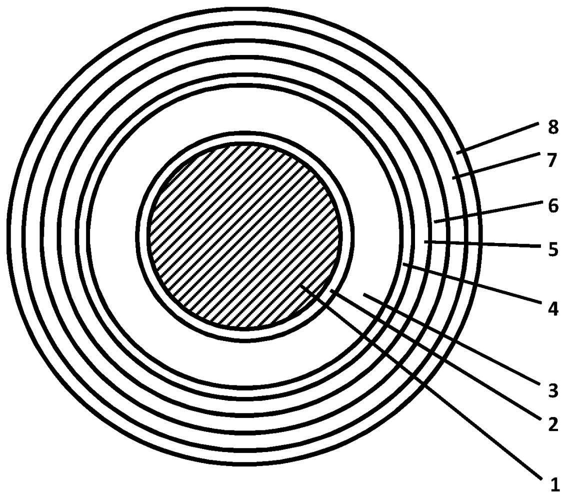


Figure 1

## Description

### Technical field

The invention belongs to the field of polymers, and particularly relates to a grafting-modified polypropylene material, a method for preparing a grafting-modified polypropylene material, a grafting-modified polypropylene material obtained by the method, as well as use of the grafting-modified polypropylene material and a cable.

### Background art

Due to excellent electrical insulating properties and low manufacturing cost, macromolecular polymer materials are widely used as insulating materials for electrical equipment in the electrical engineering field and the power industry. Among them, polymer plastic insulating materials with simple structures represented by polyethylene particularly have a wide application, and cross-linked polyethylene, copolymerized polyolefins and rubber materials developed on this basis are widely applied to the insulation of motors and transformers, the insulation of circuits and the insulation of circuit breakers. Ethylene-based polymer insulating materials have better mechanical properties and thermal properties, excellent electrical insulating properties and lower price, and are relatively mature insulating materials developed in engineering.

With rapid development of the power industry, the power grid system moves towards higher voltage level and larger electric energy transmission capacity, and higher requirements are put forward on the performance of the insulating material. In this trend, conventional polyethylene-based insulating materials fail to meet the requirements of higher long-term service temperature and electric field (the maximum long-term service temperature of currently available crosslinked polyethylene insulating materials is 70°C). Therefore, the development of new insulating materials for electrical equipment to meet the requirements of higher operating temperature and field strength is urgently needed.

The polypropylene material, as a polymer plastic with a simple structure, has all the advantages of the polyethylene material. Compared with polyethylene, polypropylene has better electrical insulation performance and higher melting point, and is expected to adapt to more severe working environment as an insulating material. However, polypropylene has mechanical properties slightly inferior to those of polyethylene, and is brittle especially at low temperatures, and cannot be used directly as an insulating material. Therefore, it is necessary to modify polypropylene materials to achieve comprehensive control of electrical, mechanical and thermal properties, so as to maintain good insulation performance at higher temperature and electric field.

A great deal of literature and data indicate that doping nanoparticles in a polypropylene material for modification is an effective way for improving its electrical insulation performance. However, in the actual preparation, the problem that the insulation performance of the material is reduced on the contrary, due to easy agglomeration of the nanoparticles caused by the difficulty in controlling the doping behavior of the nanoparticles, limits its wide application in actual engineering.

Therefore, it is necessary to search for a novel modified polypropylene material which has obvious insulation performance controlling ability, can give consideration to both mechanical property and thermal property, has stable performance and convenient preparation and is suitable for practical application in engineering.

### Contents of the invention

The invention aims to overcome the above defects of the prior art, and provide a novel grafting-modified polypropylene material which can give consideration to both mechanical property and electrical property at a higher working temperature, and is suitable for working conditions of high temperature and high operating field strength.

A first aspect of the invention is to provide a grafting-modified polypropylene material for an insulating material, characterized in that the grafting-modified polypropylene material comprises structural units derived from a polypropylene copolymer and structural units derived from an alkenyl-containing polymerizable monomer; the content of the structural units derived from the alkenyl-containing polymerizable monomer and in a grafted state in the grafting-modified polypropylene material is 0.1 to 14 wt%, preferably 0.2 to 7.5 wt%, based on the weight of the grafting-modified polypropylene material; the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

A second aspect of the invention is to provide a method for preparing a grafting-modified polypropylene material for an insulating material, the method comprising: subjecting a reaction mixture comprising a polypropylene copolymer

and an alkenyl-containing polymerizable monomer to grafting reaction in the presence of an inert gas, to obtain the grafting-modified polypropylene material; the conditions of the grafting reaction are such that: the content of the structural units derived from the alkenyl-containing polymerizable monomer and in a grafted state in the grafting-modified polypropylene material is 0.1 to 14 wt%, preferably 0.2 to 7.5 wt%, based on the weight of the grafting-modified polypropylene material; the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

A third aspect of the invention is to provide a grafting-modified polypropylene material for an insulating material obtained by the above preparation method.

A fourth aspect of the invention is to provide use of the above grafting-modified polypropylene material as an insulating material.

A fifth aspect of the invention is to provide a cable, characterized in that the cable comprises: at least one conductor and at least one electrically insulating layer surrounding the conductor; wherein, the material of the electrically insulating layer is the above grafting-modified polypropylene material.

A sixth aspect of the invention is to provide an insulating material characterized in that the insulating material comprises the above grafting-modified polypropylene material.

## Brief description of the figures

Figure 1 is a schematic cross-sectional view of a cable according to an embodiment of the invention.

Description of the reference signs

1 - conductor; 2 - conductor shielding layer; 3 - electrically insulating layer; 4 - electrically insulating shielding layer; 5 - metal shielding layer; 6 - inner sheath layer; 7 - armor; 8 - outer sheath layer.

## Detailed description of the invention

A first aspect of the invention is to provide a grafting-modified polypropylene material for an insulating material, characterized in that the grafting-modified polypropylene material comprises structural units derived from a polypropylene copolymer and structural units derived from an alkenyl-containing polymerizable monomer; the content of the structural units derived from the alkenyl-containing polymerizable monomer and in a grafted state in the grafting-modified polypropylene material is 0.1 to 14 wt%, preferably 0.2 to 7.5 wt%, based on the weight of the grafting-modified polypropylene material.

The polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

In the invention, the term "structural unit" means that it is a part of the grafting-modified polypropylene material, and the form thereof is not limited. Specifically, the term "structural units derived from a polypropylene copolymer" refers to products formed from a polypropylene copolymer, including not only those in "radical" form but also those in "polymer" form. The term "structural units derived from an alkenyl-containing polymerizable monomer" refers to products formed from an alkenyl-containing polymerizable monomer, including not only those in "radical" form, but also those in "monomer" form, as well those in "polymer" form. Said "structural unit" may be a repeating unit or a non-repeating independent unit.

The structural units derived from an alkenyl-containing polymerizable monomer "in a grafted state" refer to structural units derived from an alkenyl-containing polymerizable monomer that form a covalent bond (graft) with the polypropylene copolymer.

In the invention, the term "comonomer" of the polypropylene copolymer is known to those of ordinary skill in the art, and means a monomer copolymerized with propylene.

According to the invention, preferably, the grafting-modified polypropylene material is prepared by a grafting reaction, preferably a solid phase grafting reaction, of a polypropylene copolymer and an alkenyl-containing polymerizable monomer. The grafting reaction of the invention is a radical polymerization reaction, and thus, the term "in a grafted state" means a state in which a reactant is subjected to radical polymerization and then forms a bond with another

reactant. The bond includes both direct and indirect bonds.

During the grafting reaction, the alkenyl-containing polymerizable monomer may polymerize in itself or with each other to form a certain amount of ungrafted polymer. The term "grafting-modified polypropylene material" in the invention includes not only a product (crude product) obtained directly by grafting reaction of a polypropylene copolymer and an alkenyl-containing polymerizable monomer, but also a grafting-modified polypropylene pure product obtained by further purifying the product.

According to the invention, the polypropylene copolymer (the base polypropylene in the invention) is a propylene copolymer containing ethylene or higher alpha-olefin or a mixture thereof. Specifically, the comonomer of the polypropylene copolymer is at least one selected from $C_2$-$C_8$ alpha-olefins other than propylene. The $C_2$-$C_8$ alpha-olefins other than propylene include, but are not limited to: at least one selected from ethylene, 1-butene, 1-pentene, 4-methyl-1-pentene, 1-hexene, 1-heptene and 1-octene, preferably ethylene and/or 1-butene, and further preferably, the polypropylene copolymer consists of propylene and ethylene.

The polypropylene copolymer of the invention may be a heterophasic propylene copolymer. The heterophasic propylene copolymer may contain a propylene homopolymer or a propylene random copolymer matrix component (1), and another propylene copolymer component (2) dispersed therein. In the propylene random copolymer, the comonomers are randomly distributed in the main chain of the propylene polymer. Preferably, the polypropylene copolymer of the invention is a heterophasic propylene copolymer prepared *in situ* in a reactor according to existing processes.

According to a preferred embodiment, the heterophasic propylene copolymer comprises a propylene homopolymer matrix or a random copolymer matrix (1) and a propylene copolymer component (2) comprising one or more ethylene or higher alpha-olefin comonomers dispersed therein. The heterophasic propylene copolymer may be of sea-island structure or co-continuous structure.

Two heterophasic propylene copolymers are known in the art, i.e., a heterophasic propylene copolymer containing a random copolymer of propylene as matrix phase or a heterophasic propylene copolymer containing a homopolymer of propylene as matrix phase. The random copolymer matrix (1) is a copolymer in which the comonomer moieties are randomly distributed on the polymer chain, in other words, which consists of two monomer units of random length (including single molecule) in alternating sequence. Preferably, the comonomer in the matrix (1) is selected from ethylene or butene. It is particularly preferred that the comonomer in the matrix (1) is ethylene. Preferably, the propylene copolymer (2) dispersed in the homo- or copolymer matrix (1) of the heterophasic propylene copolymer is substantially amorphous. The term "substantially amorphous" means herein that the propylene copolymer (2) has a lower crystallinity than the homo- or copolymer matrix (1).

According to the invention, in addition to the above-described compositional characteristics, the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

According to the invention, preferably, the polypropylene copolymer further has at least one of the following characteristics: the melt flow rate under a load of 2.16 kg at 230°C is 0.01 to 60 g/10 min, preferably 0.05 to 35 g/10 min, and more preferably 0.5 to 15 g/10 min. The melting temperature Tm is 100°C or higher, preferably 110 to 180°C, more preferably 110 to 170°C, more further preferably 120 to 170°C, and still more further preferably 120 to 166°C. The weight average molecular weight is preferably $20\times10^4$ to $60\times10^4$ g/mol. The base polypropylene with high Tm has satisfactory impact strength and flexibility at both low and high temperatures, and in addition, when the base polypropylene with high Tm is used, the grafting-modified polypropylene of the invention has the advantage of being able to withstand higher working temperatures. The polypropylene copolymer of the invention is preferably a porous granular or powdery resin.

According to the invention, preferably, the polypropylene copolymer further has at least one of the following characteristics: the flexural modulus is 10 to 1000 MPa, and preferably 50 to 600 MPa; the elongation at break is $\geq$ 200%, and preferably $\geq$300%. Preferably, the tensile strength of the polypropylene copolymer is greater than 5 MPa, and preferably 10 to 40 MPa.

The polypropylene copolymer of the invention can include, but not limited to, any commercially available polypropylene powder suitable for the invention, for example, NS06 from Sinopec Wuhan Petrochemical, SPF179 from Sinopec Qilu Petrochemical, and can also be produced by the polymerization processes recorded in the Chinese patents CN1081683, CN1108315, CN1228096, CN1281380, CN1132865C, CN102020733A and the like. Common polymerization processes include Spheripol process from Basell, Hypol process from Mitsui oil chemical, Borstar PP process from Borealis, Unipol process from DOW chemical, Innovene gas phase process from INEOS (original BP-Amoco), and the like.

According to the invention, preferably, the grafting-modified polypropylene material has at least one of the following characteristics: the melt flow rate under a load of 2.16 kg at 230°C is 0.01 to 30 g/10 min, preferably 0.05 to

20 g/10 min, further preferably 0.1 to 10 g/10 min, and more preferably 0.2 to 8 g/10 min; the flexural modulus is 10 to 1250 MPa, preferably 20 to 1000 MPa, and more preferably 50 to 600 MPa; the elongation at break is ≥ 200%, preferably ≥ 300%. Preferably, the tensile strength of the grafting-modified polypropylene material is greater than 5 MPa, and preferably 10 to 40 MPa.

According to the invention, preferably, the grafting-modified polypropylene material has at least one of the following characteristics:

- the working temperature of the grafting-modified polypropylene material is ≥ 90°C, and preferably 90 to 160°C;
- the breakdown field strength $E_g$ at 90°C of the grafting-modified polypropylene material is ≥ 180 kV/mm, and preferably 180 to 800 kV/mm;
- the breakdown field strength change rate $\Delta E/E$, which is the difference $\Delta E$ between the breakdown field strength $E_g$ at 90°C of the grafting-modified polypropylene material and the breakdown field strength E at 90°C of the polypropylene copolymer divided by the breakdown field strength E at 90°C of the polypropylene copolymer, is a greater than 0.7%, preferably 0.8 to 50%, more preferably 2 to 35%, and further preferably 5 to 25%;
- the direct current volume resistivity $\rho_{vg}$ at 90°C and 15 kV/mm field strength of the grafting-modified polypropylene material is ≥ $6\times10^{12}$ Ω.m, preferably $6\times10^{12}$ Ω.m to $1.0\times10^{20}$ Ω.m;
- the ratio $\rho_{vg}/\rho_v$ of the direct current volume resistivity $\rho_{vg}$ at 90°C and 15 kV/mm field strength of the grafting-modified polypropylene material to the direct current volume resistivity $\rho_v$ at 90°C and 15 kV/mm field strength of the polypropylene copolymer is greater than 1, preferably 1.1 to 50, more preferably 1.15 to 20, and further preferably 1.2 to 10.

Preferably, the dielectric constant at 90°C and 50 Hz of the grafting-modified polypropylene material is greater than 2.0, preferably 2.1 to 2.5.

According to the invention, the alkenyl-containing polymerizable monomer is at least one selected from monomers having a structure represented by formula 1,

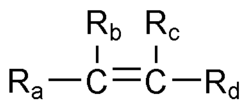
formula 1

In the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl.

According to the invention, preferably, $R_b$, $R_c$, $R_d$ are each independently selected from H, substituted or unsubstituted $C_1$-$C_6$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano, substituted or unsubstituted $C_3$-$C_{20}$ silyl; the substituent group is halogen, hydroxy, amino, $C_1$-$C_{12}$ alkyl, $C_3$-$C_6$ cycloalkyl, $C_1$-$C_{12}$ alkoxy, $C_1$-$C_{12}$ acyloxy.

According to the invention, preferably, $R_b$, $R_c$, $R_d$ are each independently selected from H, substituted or unsubstituted $C_1$-$C_6$ alkyl;

$R_a$ is selected from a group represented by formula 2, a group represented by formula 3, a group represented by formula 4, a group represented by formula 5, a group represented by formula 6, a combination of a group represented by formula 6 and a group represented by formula 7, a heterocyclic group;

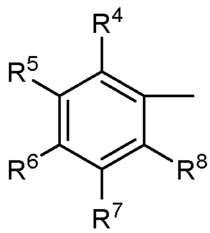
formula 2

In the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine

group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

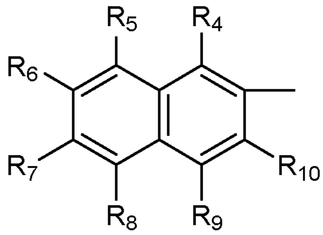

formula 3

In the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

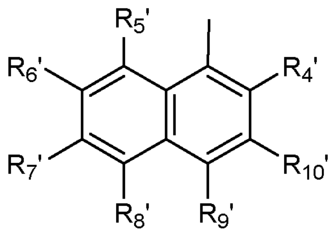

formula 4

In the formula 4, $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

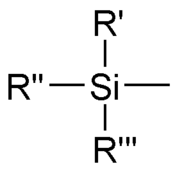

formula 5

In the formula 5, R', R", R‴ are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;

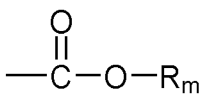 formula 6 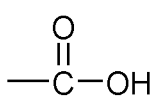 formula 7

In the formula 6, $R_m$ is selected from the following groups that are substituted or unsubstituted: $C_1$-$C_{20}$ linear

alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxy;

the heterocyclic group is selected from imidazolyl, pyrazolyl, carbazolyl, pyrrolidinonyl, pyridyl, piperidinyl, caprolactam group, pyrazinyl, thiazolyl, purinyl, morpholinyl, oxazolinyl.

According to a preferred embodiment of the invention, the grafting-modified polypropylene material is an aromatic olefin grafting-modified polypropylene material, the alkenyl-containing polymerizable monomer is a styrenic monomer, and the content of the structural units derived from the styrenic monomer and in a grafted state in the aromatic olefin grafting-modified polypropylene material is 0.5 to 14 wt%, preferably 1 to 7.5 wt%, and more preferably 1.5 to 5 wt%, based on the weight of the aromatic olefin grafting-modified polypropylene material;

preferably, the styrenic monomer is at least one selected from a monomer having the structure represented by formula 8, a monomer having the structure represented by formula 9 and a monomer having the structure represented by formula 10;

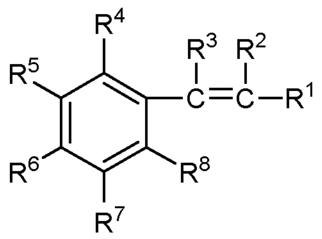

formula 8

In the formula 8, $R^1$, $R^2$, $R^3$ are each independently selected from H, substituted or unsubstituted $C_1$-$C_6$ alkyl; $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^1$, $R^2$, $R^3$ are each independently selected from H, substituted or unsubstituted $C_1$-$C_3$ alkyl, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

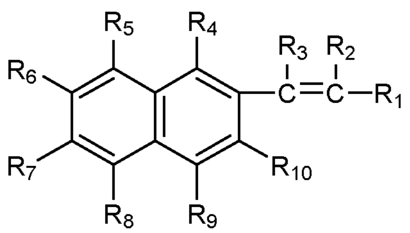

formula 9

In the formula 9, $R_1$, $R_2$, $R_3$ are each independently selected from H, substituted or unsubstituted $C_1$-$C_6$ alkyl; $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_1$, $R_2$, $R_3$ are each independently selected from H, substituted or unsubstituted $C_1$-$C_3$ alkyl, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

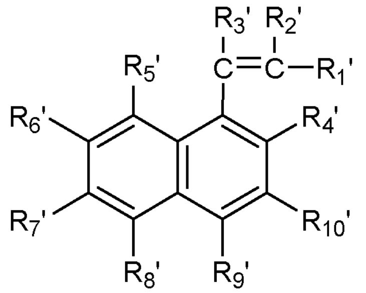

formula 10

In the formula 10, $R_1$', $R_2$', $R_3$' are each independently selected from H, substituted or unsubstituted $C_1$-$C_6$ alkyl; $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_1$', $R_2$', $R_3$' are each independently selected from H, substituted or unsubstituted $C_1$-$C_3$ alkyl, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;
preferably, the styrenic monomer is at least one selected from styrene, $\alpha$-methylstyrene, 1-vinyl naphthalene, 2-vinyl naphthalene, mono- or polysubstituted styrene, mono- or polysubstituted $\alpha$-methylstyrene, mono- or polysubstituted 1-vinyl naphthalene and mono- or polysubstituted 2-vinyl naphthalene; the substituent group preferably is at least one selected from halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, Ci-Cs linear amine group and $C_3$-$C_8$ branched amine group or cyclic amine group.

More preferably, the styrenic monomer is at least one selected from styrene, $\alpha$-methylstyrene, 2-methylstyrene, 3-methylstyrene and 4-methylstyrene.

According to the invention, preferably, the aromatic olefin grafting-modified polypropylene material has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1250 MPa, preferably 20 to 1000 MPa, and more preferably 50 to 600 MPa; the elongation at break is ≥ 200%, preferably ≥ 300%. Preferably, the tensile strength of the aromatic olefin grafting-modified polypropylene material is greater than 5 MPa, and preferably 10 to 40 MPa.

According to the invention, preferably, the aromatic olefin grafting-modified polypropylene material has at least one of the following characteristics:

- the working temperature of the aromatic olefin grafting-modified polypropylene material is ≥ 90°C, and preferably 90 to 160°C;
- the breakdown field strength $E_g$ at 90°C of the aromatic olefin grafting-modified polypropylene material is ≥ 200 kV/mm, and preferably 200 to 800 kV/mm;
- the breakdown field strength change rate $\Delta E/E$, which is the difference $\Delta E$ between the breakdown field strength $E_g$ at 90°C of the aromatic olefin grafting-modified polypropylene material and the breakdown field strength E at 90°C of the polypropylene copolymer divided by the breakdown field strength E at 90°C of the polypropylene copolymer, is greater than 1.5%, preferably 1.6 to 40%, more preferably 5 to 30%, and further preferably 10 to 20%;
- the direct current volume resistivity $\rho_{vg}$ at 90°C and 15 kV/mm field strength of the aromatic olefin grafting-modified polypropylene material is $\geq 1.0\times10^{13}$ Q.m, preferably $1.5\times10^{13}$ Q.m to $1.0\times10^{20}$ Q.m;
- the ratio $\rho_{vg}/\rho_v$ of the direct current volume resistivity $\rho_{vg}$ at 90°C and 15 kV/mm field strength of the aromatic olefin grafting-modified polypropylene material to the direct current volume resistivity $\rho_v$ at 90°C and 15 kV/mm field strength of the polypropylene copolymer is greater than 1, preferably 1.5 to 50, more preferably 2 to 20, and further preferably 3 to 10.

According to a specific embodiment of the invention, the grafting-modified polypropylene material is a silane-modified polypropylene graft, the alkenyl-containing polymerizable monomer is an alkenyl-containing silane monomer, and the content of the structural units derived from the alkenyl-containing silane monomer and in a grafted state in the silane-modified polypropylene graft is 0.2 to 6 wt%, preferably 0.2 to 2.5 wt%, based on the weight of the silane-modified polypropylene graft;

preferably, the alkenyl-containing silane monomer is at least one selected from a monomer having the structure represented by formula 11,

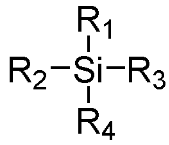

formula 11

wherein, $R_1$ is $C_2$-$C_{12}$ alkenyl, preferably monounsaturated alkenyl; $R_2$, $R_3$, $R_4$ are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;
more preferably, the alkenyl-containing silane monomer is at least one selected from vinyltriethoxysilane, vinyltrimethoxysilane, vinyltriisopropoxysilane, vinyltri-tert-butoxysilane, vinyltriacetoxysilane, methylvinyldimethoxysilane, ethylvinyldiethoxysilane, allyltriethoxysilane, allyltrimethoxysilane, allyltriisopropoxysilane, vinyltris(β-methoxyethoxy)silane, allyltris(β-methoxyethoxy)silane, allyltri-tert-butoxysilane, allyltriacetoxysilane, methylallyldimethoxysilane and ethylallyldiethoxysilane.

According to the invention, preferably, the silane-modified polypropylene graft has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1000 MPa, preferably 50 to 600 MPa; the elongation at break is ≥ 200%, preferably ≥ 300%. Preferably, the tensile strength of the silane-modified polypropylene graft is greater than 5 MPa, and preferably 10 to 40 MPa.
According to the invention, preferably, the silane-modified polypropylene graft has at least one of the following characteristics:

- the working temperature of the silane-modified polypropylene graft is ≥ 90°C, and preferably 90 to 160°C;
- the breakdown field strength $E_g$ at 90°C of the silane-modified polypropylene graft is ≥ 200 kV/mm, and preferably 200 to 800 kV/mm;
- the breakdown field strength change rate $\Delta E/E$, which is the difference $\Delta E$ between the breakdown field strength $E_g$ at 90°C of the silane-modified polypropylene graft and the breakdown field strength E at 90°C of the polypropylene copolymer divided by the breakdown field strength E at 90°C of the polypropylene copolymer, is greater than 0.7%, preferably 0.8 to 40%, more preferably 2 to 20%, and further preferably 6 to 15%;
- the direct current volume resistivity $\rho_{vg}$ at 90°C and 15 kV/mm field strength of the silane-modified polypropylene graft is ≥ $6\times10^{12}$ Ω.m, preferably $6\times10^{12}$ S2.m to $1.0\times10^{20}$ Q.m;
- the ratio $\rho_{vg}/\rho_v$ of the direct current volume resistivity $\rho_{vg}$ at 90°C and 15 kV/mm field strength of the silane-modified polypropylene graft to the direct current volume resistivity $\rho_v$ at 90°C and 15 kV/mm field strength of the polypropylene copolymer is greater than 1, preferably 1.1 to 8.0, more preferably 1.15 to 3, and further preferably 1.2 to 1.8.

According to a specific embodiment of the invention, the alkenyl-containing polymerizable monomer is an acrylate monomer and an optional acrylic monomer, and the content of the structural units derived from the acrylate monomer and the optional acrylic monomer and in a grafted state in the grafting-modified polypropylene material is 0.3 to 7 wt%, preferably 0.8 to 5 wt%, based on the weight of the grafting-modified polypropylene material;

preferably, the acrylate monomer is at least one selected from a monomer having the structure represented by formula 12;

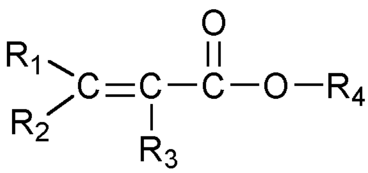

formula 12

wherein, $R_1$, $R_2$, $R_3$ are each independently selected from H, $C_1$-$C_6$ linear alkyl, $C_3$-$C_6$ branched alkyl; $R_4$ is selected

from the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxy;

more preferably, the acrylate monomer is at least one selected from methyl (methyl)acrylate, sec-butyl (methyl)acrylate, ethyl (methyl)acrylate, n-butyl (methyl)acrylate, isobutyl (methyl)acrylate, tert-butyl (methyl)acrylate, isooctyl (methyl)acrylate, dodecyl (methyl)acrylate, cocinin (methyl)acrylate, octadecyl (methyl)acrylate, dimethylaminoethyl (methyl)acrylate, diethylaminoethyl (methyl)acrylate, dimethylaminopropyl (methyl)acrylate, and glycidyl (methyl)acrylate;

preferably, the acrylic monomer at least one selected from a monomer having the structure represented by formula 13;

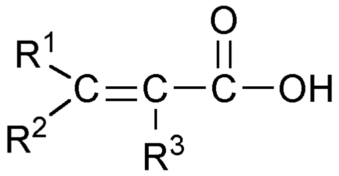

formula 13

wherein, $R^1$, $R^2$, $R^3$ are each independently selected from H, $C_1$-$C_6$ linear alkyl, $C_3$-$C_6$ branched alkyl;

more preferably, the acrylic monomer is at least one selected from acrylic acid, methacrylic acid and 2-ethylacrylic acid.

In the invention, the $C_3$-$C_{12}$ epoxyalkylalkyl refers to epoxyalkyl-substituted alkyl having 3 to 12 carbon atoms, e.g., oxiranylmethyl.

According to the invention, preferably, the molar ratio of structural units derived from the acrylate monomer to structural units derived from the acrylic monomer is 1: 0-2, preferably 1: 0.125-1.

According to the invention, preferably, the alkenyl-containing polymerizable monomer is an acrylate monomer and an optional acrylic monomer, the grafting-modified polypropylene material has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1100 MPa, preferably 20 to 1000 MPa, and more preferably 50 to 600 MPa; the elongation at break is $\geq$ 200%, preferably $\geq$ 300%. Preferably, the tensile strength of the grafting-modified polypropylene material is greater than 5 MPa, and preferably 10 to 40 MPa.

According to the invention, preferably, the alkenyl-containing polymerizable monomer is an acrylate monomer and an optional acrylic monomer, the grafting-modified polypropylene material has at least one of the following characteristics:

- the working temperature of the grafting-modified polypropylene material is $\geq$ 90°C, and preferably 90 to 160°C;
- the breakdown field strength $E_g$ at 90°C of the grafting-modified polypropylene material is $\geq$ 180 kV/mm, and preferably 180 to 800 kV/mm;
- the breakdown field strength change rate $\Delta E/E$, which is the difference $\Delta E$ between the breakdown field strength $E_g$ at 90°C of the grafting-modified polypropylene material and the breakdown field strength E at 90°C of the polypropylene copolymer divided by the breakdown field strength E at 90°C of the polypropylene copolymer, is greater than 2%, preferably 2.5 to 50%, more preferably 4 to 35%, and further preferably 5 to 25%;
- the direct current volume resistivity $\rho_{vg}$ at 90°C and 15 kV/mm field strength of the grafting-modified polypropylene material is $\geq 1.0\times10^{13}$ $\Omega$.m, preferably $1.5\times10^{13}$ Q.m to $1.0\times10^{20}$ $\Omega$.m;

  - the ratio $\rho_{vg}/\rho_v$ of the direct current volume resistivity $\rho_{vg}$ at 90°C and 15 kV/mm field strength of the grafting-modified polypropylene material to the direct current volume resistivity $\rho_v$ at 90°C and 15 kV/mm field strength of the polypropylene copolymer is greater than 1.5, preferably 1.8 to 30, more preferably 2 to 10, and further preferably 2.5 to 6.

According to a specific embodiment of the invention, the grafting-modified polypropylene material is a heterocycle grafting-modified polypropylene material, the alkenyl-containing polymerizable monomer is an alkenyl-containing heterocyclic monomer, and the content of the structural units derived from the alkenyl-containing heterocyclic monomer and in a grafted state in the heterocycle grafting-modified polypropylene material is 0.5 to 6 wt%, preferably 0.5 to 4 wt%, based on the weight of the heterocycle grafting-modified polypropylene material;

preferably, the alkenyl-containing heterocyclic monomer is at least one selected from alkenyl-containing imidazoles, alkenyl-containing pyrazoles, alkenyl-containing carbazoles, alkenyl-containing pyrrolidones, alkenyl-containing pyridines or pyridiniums, alkenyl-containing piperidines, alkenyl-containing caprolactams, alkenyl-containing pyrazines, alkenyl-containing thiazoles, alkenyl-containing purines, alkenyl-containing morpholines and alkenyl-containing oxazolines; preferably, the alkenyl-containing heterocyclic monomer is a monoalkenyl-containing heterocyclic monomer.

preferably, the alkenyl-containing heterocyclic monomer is at least one selected from : 1-vinyl imidazole, 2-methyl-1-vinyl imidazole, N-allyl imidazole, 1-vinyl pyrazole, 3-methyl-1-vinyl pyrazole, vinyl carbazole, N-vinyl pyrrolidone, 2-vinyl pyridine, 3-vinyl pyridine, 4-vinyl pyridine, 2-methyl-5-vinyl pyridine, vinyl pyridine N oxide, vinyl pyridinium, vinyl piperidine, N-vinyl caprolactam, 2-vinyl pyrazine, N-vinyl piperazine, 4-methyl-5-vinyl thiazole, N-vinyl purine, vinyl morpholine and vinyl oxazoline.

According to the invention, preferably, the heterocycle grafting-modified polypropylene material has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1000 MPa, preferably 50 to 500 MPa; the elongation at break is ≥ 200%, preferably ≥ 300%. Preferably, the tensile strength of the heterocycle grafting-modified polypropylene material is greater than 5 MPa, and preferably 10 to 40 MPa.

According to the invention, preferably, the heterocycle grafting-modified polypropylene material has at least one of the following characteristics:

- the working temperature of the heterocycle grafting-modified polypropylene material is ≥ 90°C, and preferably 90 to 160°C;
- the breakdown field strength $E_g$ at 90°C of the heterocycle grafting-modified polypropylene material is ≥ 190 kV/mm, and preferably 190 to 800 kV/mm;
- the breakdown field strength change rate $\Delta E/E$, which is the difference $\Delta E$ between the breakdown field strength $E_g$ at 90°C of the heterocycle grafting-modified polypropylene material and the breakdown field strength E at 90°C of the polypropylene copolymer divided by the breakdown field strength E at 90°C of the polypropylene copolymer, is greater than 1%, preferably 1.5 to 50%, more preferably 2 to 35%, and further preferably 5 to 25%;

- the direct current volume resistivity $\rho_{vg}$ at 90°C and 15 kV/mm field strength of the heterocycle grafting-modified polypropylene material is $\geq 7\times10^{12}$ Ω.m, preferably $7\times10^{12}$ Ω.m to $1.0\times10^{20}$ Ω.m;

  - the ratio $\rho_{vg}/\rho_v$ of the direct current volume resistivity $\rho_{vg}$ at 90°C and 15 kV/mm field strength of the heterocycle grafting-modified polypropylene material to the direct current volume resistivity $\rho_v$ at 90°C and 15 kV/mm field strength of the polypropylene copolymer is greater than 1, preferably 1.1 to 20, more preferably 1.2 to 10, and further preferably 1.3 to 4.

The polypropylene graft of the invention can be prepared by a method comprising the step of subjecting a reaction mixture comprising a polypropylene copolymer and an alkenyl-containing polymerizable monomer to a solid-phase grafting reaction in the presence of an inert gas to obtain the polypropylene graft.

A second aspect of the invention is to provide a method for preparing a grafting-modified polypropylene material for an insulating material, the method comprising: subjecting a reaction mixture comprising a polypropylene copolymer and an alkenyl-containing polymerizable monomer to grafting reaction in the presence of an inert gas, to obtain the grafting-modified polypropylene material;

the conditions of the grafting reaction are such that: the content of the structural units derived from the alkenyl-containing polymerizable monomer and in a grafted state in the grafting-modified polypropylene material is 0.1 to 14 wt%, preferably 0.2 to 7.5 wt%, based on the weight of the grafting-modified polypropylene material;

the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

The grafting reaction of the invention may be carried out with a reference to various methods which are conventional in the art, preferably a solid phase grafting reaction, for example, formation of active grafting sites on a polypropylene copolymer in the presence of an alkenyl-containing polymerizable monomer for grafting, or formation of active grafting sites on a polypropylene copolymer first followed by treatment with a monomer for grafting. The grafting sites

may be formed by treatment with a free radical initiator, or by treatment with high energy ionizing radiation or microwaves. The free radicals generated in the polymer as a result of the chemical or radiation treatment form grafting sites on the polymer and initiate the polymerization of the monomer at these sites.

Preferably, the grafting sites are initiated by a free radical initiator and the grafting reaction proceeds further. In this case, the reaction mixture comprises a free radical initiator; further preferably, the free radical initiator is selected from a peroxide-based free radical initiator and/or an azo-based free radical initiator.

Wherein, the peroxide-based radical initiator is preferably at least one selected from the group consisting of dibenzoyl peroxide, dicumyl peroxide, di-tert-butyl peroxide, lauroyl peroxide, dodecyl peroxide, tert-butyl peroxybenzoate, diisopropyl peroxydicarbonate, tert-butyl peroxy(2-ethylhexanoate) and dicyclohexyl peroxydicarbonate; the azo-based radical initiator is preferably azobisisobutyronitrile and/or azobisisoheptonitrile.

More preferably, the grafting sites are initiated by a peroxide-based free radical initiator and the grafting reaction proceeds further.

Furthermore, the grafting reaction of the invention can also be carried out according to the methods described in CN106543369A, CN104499281A, CN102108112A, CN109251270A, CN1884326A and CN 101492517B.

The invention also has no special limitation on the technical conditions of the grafting reaction, and specifically, the temperature of the grafting reaction can be 30-130°C, and preferably 60-120°C; the time can be 0.5-10 h, and preferably 1-5 h.

The amount of each component used in the grafting reaction of the invention is not particularly limited on the premise that the above-mentioned product characteristics are satisfied, and specifically,

For styrenic monomer, the mass ratio of the free radical initiator to the styrenic monomer is 0.1-10: 100, preferably 0.5-5: 100. The mass ratio of the styrenic monomer to the polypropylene copolymer is 0.5-16: 100, preferably 1-12: 100, and more preferably 2-10: 100. The conditions of the grafting reaction are such that: the content of the structural units derived from the styrenic monomer and in a grafted state in the aromatic olefin grafting-modified polypropylene material is 0.5 to 14 wt%, preferably 1 to 7.5 wt%, and more preferably 1.5 to 5 wt%, based on the weight of the aromatic olefin grafting-modified polypropylene material.

For an alkenyl-containing silane monomer, the mass ratio of the free radical initiator to the alkenyl-containing silane monomer is 0.1-10: 100, preferably 0.5-6: 100. The mass ratio of the alkenyl-containing silane monomer to the polypropylene copolymer is 0.5-12: 100, preferably 0.8-9: 100, and more preferably 1-6: 100. The conditions of the grafting reaction are such that: the content of the structural units derived from the alkenyl-containing silane monomer and in a grafted state in the silane-modified polypropylene graft is 0.2 to 6 wt%, preferably 0.2 to 2.5 wt%, based on the weight of the silane-modified polypropylene graft.

For an acrylate monomer and an optional acrylic monomer, the ratio of the mass of the free radical initiator to the total mass of the acrylate monomer and the optional acrylic monomer is 0.1-10: 100, preferably 0.5-5: 100. The ratio of the total mass of the acrylate monomer and the optional acrylic monomer to the mass of the polypropylene copolymer is 0.1-10: 100, preferably 0.5-8: 100, and more preferably 0.8-7: 100. The conditions of the grafting reaction are such that: the content of the structural units derived from the acrylate monomer and the optional acrylic monomer and in a grafted state in the grafting-modified polypropylene material is 0.3 to 7 wt%, preferably 0.8 to 5 wt%, based on the weight of the grafting-modified polypropylene material.

For an alkenyl-containing heterocyclic monomer, the mass ratio of the free radical initiator to the alkenyl-containing heterocyclic monomer is 0.1-10: 100, preferably 0.5-5: 100. The mass ratio of the alkenyl-containing heterocyclic monomer to the polypropylene copolymer is 0.3-12: 100, preferably 0.5-10: 100. The conditions of the grafting reaction are such that: the content of the structural units derived from the alkenyl-containing heterocyclic monomer and in a grafted state in the heterocycle grafting-modified polypropylene material is 0.5 to 6 wt%, preferably 0.5 to 4 wt%, based on the weight of the heterocycle grafting-modified polypropylene material.

In the invention, the term "reaction mixture" includes all materials added to the grafting reaction system, and the materials may be added at one time or at different stages of the reaction.

The reaction mixture of the invention may also comprise a dispersant, wherein the dispersant is preferably water or an aqueous solution of sodium chloride. The mass content of the dispersant is preferably 50-300% of the mass of the polypropylene copolymer.

The reaction mixture of the invention may further comprise an interfacial agent, wherein the interfacial agent is an organic solvent having a swelling effect on polyolefin, and is preferably at least one selected from the following organic solvents having a swelling effect on polypropylene copolymer: ether solvents, ketone solvents, aromatic hydrocarbon solvents, and alkane solvents; more preferably at least one selected the following organic solvents: chlorobenzene, polychlorinated benzene, alkanes or cycloalkanes of $C_6$ or more, benzene, $C_1$-$C_4$ alkyl substituted benzene, $C_2$-$C_6$ fatty ethers, $C_3$-$C_6$ fatty ketones and decalin; further preferably at least one selected from the following organic solvents: benzene, toluene, xylene, chlorobenzene, tetrahydrofuran, diethyl ether, acetone, hexane, cyclohexane, decalin, heptane. The mass content of the interfacial agent is preferably 1-30%, and more preferably 10-25%, of the mass of the polypropylene copolymer.

The reaction mixture of the invention may further comprise an organic solvent as a solvent for dissolving the solid radical initiator, the organic solvent preferably comprising at least one selected from $C_2$-$C_5$ alcohols, $C_2$-$C_4$ ethers and $C_3$-$C_5$ ketones, more preferably at least one selected from $C_2$-$C_4$ alcohols, $C_2$-$C_3$ ethers and $C_3$-$C_5$ ketones, and most preferably at least one selected from ethanol, diethyl ether and acetone. The mass content of the organic solvent is preferably 1-35% of the mass of the polypropylene copolymer.

In the preparation method of the grafting-modified polypropylene material of the invention, the definitions of the alkenyl-containing polymerizable monomer and the polypropylene copolymer are the same as those described above, and are not described herein again.

According to the invention, the preparation method of the grafting-modified polypropylene material can be selected from the following:

Method I, the preparation method comprises the following steps:

a. placing a polypropylene copolymer in a closed reactor, followed by inert gas replacement;
b. adding a free radical initiator and an alkenyl-containing polymerizable monomer to the closed reactor, and mixing with stirring;
c. optionally adding an interfacial agent and optionally swelling the reaction system;
d. optionally adding a dispersant, and heating the reaction system to the grafting reaction temperature, to carry out the grafting reaction;
e. after the end of the reaction, optionally filtering (in the case of using an aqueous phase dispersant) and drying to obtain the grafting-modified polypropylene material.

More specifically, the preparation method comprises the following steps:

a. placing a polypropylene copolymer in a closed reactor, followed by inert gas replacement;
b. dissolving a free radical initiator in an alkenyl-containing polymerizable monomer to obtain a solution, adding the solution to the closed reactor containing the polypropylene copolymer, and mixing with stirring;
c. adding 0-30 parts of an interfacial agent, and optionally swelling the reaction system at 20-60°C for 0-24 h;
d. adding 0-300 parts of a dispersant, and heating the system to the graft polymerization temperature of 30-130°C, to carry out the reaction for 0.5-10 h;
e. after the end of the reaction, optionally filtering (in the case of using an aqueous phase dispersant) and drying to obtain the grafting-modified polypropylene material.

Method II, the preparation method comprises the following steps:

a. placing a polypropylene copolymer in a closed reactor, followed by inert gas replacement;
b. mixing an organic solvent and a free radical initiator, and adding the mixture to the closed reactor;
c. removing the organic solvent;
d. adding an alkenyl-containing polymerizable monomer, optionally adding an interfacial agent, and optionally swelling the reaction system;
e. optionally adding a dispersant, and heating the reaction system to the grafting reaction temperature, to carry out the grafting reaction;
f. after the end of the reaction, optionally filtering (in the case of using an aqueous phase dispersant) and drying to obtain the grafting-modified polypropylene material.

More specifically, the preparation method comprises the following steps:

a. placing a polypropylene copolymer in a closed reactor, followed by inert gas replacement;
b. mixing an organic solvent and a free radical initiator to obtain a solution, and adding the solution to the closed reactor containing the polypropylene copolymer;
c. removing the organic solvent by inert gas purging or by vacuum;
d. adding an alkenyl-containing polymerizable monomer, adding 0-30 parts of an interfacial agent, and optionally swelling the reaction system at 20-60°C for 0-24 h;
e. adding 0-300 parts of a dispersant, and heating the system to the graft polymerization temperature of 30-130°C, to carry out the reaction for 0.5-10 h;
f. after the end of the reaction, optionally filtering (in the case of using an aqueous phase dispersant) and drying to obtain the grafting-modified polypropylene material.

According to the method of the invention, if volatile components are present in the system after the end of the reaction, the method of the invention preferably comprises a step of devolatilization, which can be carried out by any conventional method, including vacuum extraction or the use of a stripping agent at the end of the grafting reaction. Suitable stripping agent includes, but is not limited to, an inert gas.

As described above, the term "grafting-modified polypropylene material" in the invention includes not only a product (crude product) obtained directly by grafting reaction of a polypropylene copolymer and an alkenyl-containing polymerizable monomer, but also a grafting-modified polypropylene pure product obtained by further purifying the product. Therefore, the preparation method of the invention optionally comprises a step of purifying the crude product. The purification can be carried out by various methods which are conventional in the art, such as extraction.

The invention has no particular limitation on the grafting efficiency of the grafting reaction, but a higher grafting efficiency is more advantageous for obtaining a polypropylene graft having desired properties by a one-step grafting reaction. Therefore, the grafting efficiency of the grafting reaction is preferably controlled to be 5 to 100%, and more preferably 5 to 80%. The term "grafting efficiency" is well known to those of ordinary skill in the art, and refers to the total amount of alkenyl-containing polymerizable monomer on the graft per total amount of alkenyl-containing polymerizable monomer charged to the reaction.

Preferably, for a styrenic monomer, the grafting efficiency of the grafting reaction is preferably controlled to be 30 to 100%, and more preferably 35 to 80%. For an alkenyl-containing silane monomer, the grafting efficiency of the grafting reaction is preferably controlled to be 5 to 100%, and more preferably 5 to 60%. For an acrylate monomer and an optional acrylic monomer, the grafting efficiency of the grafting reaction is preferably controlled to be 30 to 100%, and more preferably 35 to 80%. For an alkenyl-containing heterocyclic monomer, the grafting efficiency of the grafting reaction is preferably controlled to be 30 to 100%, and more preferably 35 to 80%.

The inert gas of the invention may be various inert gases commonly used in the art, including but not limited to nitrogen, argon.

A third aspect of the invention is to provide a grafting-modified polypropylene material for an insulating material obtained by the above preparation method.

A fourth aspect of the invention is to provide use of the above grafting-modified polypropylene material as an insulating material.

Further preferably, the insulating material is a cable insulating material; preferably a direct current cable insulating material.

More preferably, the insulating material is a cable insulating layer material.

The grafting-modified polypropylene used in the invention can be directly used as a base material of an insulating material without blending other polymers.

A fifth aspect of the invention is to provide a cable, characterized in that the cable comprises: at least one conductor and at least one electrically insulating layer surrounding the conductor; wherein, the material of the electrically insulating layer is the grafting-modified polypropylene material.

The core of the invention is to use a novel material as an electrically insulating layer of a cable, therefore, there is no special limitation on the form and the specific structure of the cable in the invention, and various cable forms (direct current or alternating current, single core or multi-core) and corresponding various structures that are conventional in the art can be used. In the cable of the invention, except for the use of the novel grafting-modified polypropylene material in the electrically insulating layer, other layer structures and other layer materials can be selected conventionally in the art.

The cable of the invention can be a direct current cable or an alternating current cable; preferably a direct current cable; more preferably, the cable is a medium high voltage direct current cable or an extra high voltage direct current cable. In the invention, low voltage (LV) denotes voltages below 1 kV, medium voltage (MV) denotes voltages in the range of 1 kV to 40 kV, high voltage (HV) denotes voltages above 40 kV, preferably above 50 kV, and extra high voltage (EHV) denotes voltages of at least 230 kV.

According to a preferred embodiment of the invention, the cable has at least one cable core, and each cable core comprises, in order from inside to outside: a conductor, an optional conductor shielding layer, an electrically insulating layer, an optional electrically insulating shielding layer, an optional metal shielding layer. The conductor shielding layer, the electrically insulating shielding layer and the metal shielding layer can be arranged according to requirements, and are generally used in cables above 6 kV.

In addition to the above structure, the cable may further comprise an armor and/or a sheath layer.

The cable of the invention may be a mono- or multi-core cable. For multi-core cable, the cable may further comprise a filling layer and/or a wrapping layer. The filling layer is formed by filling materials filled among the wire cores. The wrapping layer coats the outside of all wire cores, guarantees that the wire cores and the filling layer are in circular form, prevents the wire cores from being scratched by the armor, and plays fire-retardant effect.

In the cable of the invention, the conductor is a conductive element, generally made of a metallic material, preferably aluminum, copper or other alloys, comprising one or more metallic wires. The direct current resistance and the number of monofilaments of the conductor need to meet the requirements of GB/T3956. Preferably, the conductor

has a compacted stranded round structure, with a nominal sectional area of less than or equal to 800 $mm^2$; or it has a split conductor structure, with a nominal sectional area of greater than or equal to 1000 $mm^2$, the number of conductors being not less than 170.

In the cable of the invention, the conductor shielding layer can be a covering layer made of polypropylene, polyolefin elastomer, carbon black and other materials, having a volume resistivity at 23°C of < 1.0 Ω.m, a volume resistivity at 90°C of < 3.5 Ω.m, a melt flow rate at 230°C and under a load of 2.16 kg of usually 0.01 to 30 g/10 min, preferably 0.05 to 20 g/10 min, further preferably 0.1 to 10 g/10 min, and more preferably 0.2 to 8 g/10 min; a tensile strength of ≥ 12.5 MPa; an elongation at break of ≥ 150%. The thickness of the thinnest point of the conductor shielding layer is not less than 0.5 mm, and the average thickness is not less than 1.0 mm.

In the cable of the invention, the material of the electrically insulating layer is at least one grafting-modified polypropylene material, which means that the base material constituting the electrically insulating layer is the grafting-modified polypropylene material, and additional components, for example, polymer components or additives, preferably additives, such as any one or more selected from antioxidants, stabilizers, processing aids, flame retardants, water tree retarding additives, acid or ion scavengers, inorganic fillers, voltage stabilizers and copper inhibitors, may be comprised in addition to the grafting-modified polypropylene material. The types and amounts of additives used are conventional and known to those of ordinary skill in the art.

The method for preparing the electrically insulating layer of the invention may also be a conventional method in the field of cable preparation, for example, mixing the grafting-modified polypropylene material with various optional additives, granulating the mixture by a twin-screw extruder, and then extruding the resulting granules through an extruder to obtain the electrically insulating layer. Generally, the conductor shielding material can be co-extruded with the granules of the grafting-modified polypropylene material to form a structure of conductor shielding layer + electrically insulating layer, or to form a structure of conductor shielding layer + electrically insulating layer + electrically insulating shielding layer. The specific operation can be implemented using the conventional methods and process conditions in the art.

Due to the use of the grafting-modified polypropylene material, the thickness of the electrically insulating layer can be only 50% to 95% of the nominal thickness value of the XLPE insulating layer in GB/T12706, and preferably, the thickness of the electrically insulating layer is 70% to 90% of the nominal thickness value of the XLPE insulating layer in GB/T12706; the eccentricity is not more than 10%.

In the cable of the invention, the electrically insulating shielding layer can be a covering layer made of polypropylene, polyolefin elastomer, carbon black and other materials, having a volume resistivity at 23°C of < 1.0 Ω.m, a volume resistivity at 90°C of < 3.5 Ω.m, a melt flow rate at 230°C and under a load of 2.16 kg of usually 0.01 to 30 g/10 min, preferably 0.05 to 20 g/10 min, further preferably 0.1 to 10 g/10 min, and more preferably 0.2 to 8 g/10 min; a tensile strength of ≥ 12.5 MPa; an elongation at break of ≥ 150%. The thickness of the thinnest point of the electrically insulating shielding layer is not less than 0.5 mm, and the average thickness is not less than 1.0 mm.

In the cable of the invention, the metal shielding layer can be a copper strip shielding layer or a copper wire shielding layer.

In the cable of the invention, the filling layer can be made of macromolecular materials, such as PE/PP/PVC or recycled rubber materials.

In the cable of the invention, the wrapping layer/armor is usually a metal covering layer which is made of copper wire metal cages, lead or aluminum metal sleeves and the like and wraps the outer surface of the electrically insulating shielding layer, and has a direct current volume resistivity at room temperature of ≤ 1000 Ω.m.

In the cable of the invention, the material of the sheath layer can be any one selected from polyvinyl chloride, polyethylene or low-smoke halogen-free materials. The sheath layer comprises not only an inner sheath layer, but also an outer sheath layer.

The above structure of each layer can be formed by conventional methods in the art. For example, the conductor shielding layer, the electrically insulating layer and the sheath layer can be formed through extrusion coating by an extruder, and the metal shielding layer and the armor can be formed by winding.

The cable of the invention may be prepared by various preparation methods that are conventional in the art, and there is no particular limitation thereto in the invention.

According to a specific embodiment of the invention, the preparation method of the cable is as follows:
Preparation of a conductor: subjecting multiple monofilament conductors (e.g. made of aluminum) to a compaction stranding operation, to obtain a conductor inner core; or performing a wire bundling operation, and then subjecting each bundled monofilament conductor to a stranding operation, to obtain a conductor inner core.

Preparation of modified polypropylene particles: mixing modified polypropylene material with optional additives, and granulating by a twin-screw extruder.

Preparation of a conductor shielding layer and an electrically insulating layer: co-extrusion coating the conductor shielding material and the modified polypropylene particles outside the conductor inner core by an extruder to form a conductor shielding layer + an electrically insulating layer, or a conductor shielding layer + an electrically insulating layer + an electrically insulating shielding layer (an outer shielding layer).

Preparation of a metal shielding layer: winding a copper strip or a copper wire outside the electrically insulating layer (the electrically insulating shielding layer) to form a metal shielding layer.

Preparation of an inner sheath layer: extruding the sheath layer granules outside the metal shielding layer by an extruder to form an inner sheath layer.

Preparation of an armor: preparing a steel wire or steel strip armor using galvanized steel/stainless steel/aluminum alloy, and winding a single-layer armor leftward or a double-layer armor inner layer rightward and outer layer leftward on the inner sheath layer, where the steel wire or the steel strip armor should be tight, so that the gap between adjacent steel wires/steel strips is minimum.

Preparation of an outer sheath layer: extruding the sheath layer granules outside the armor by an extruder to form an outer sheath layer. Finally, the cable is prepared.

The grafting-modified polypropylene material of the invention can give consideration to both mechanical property and electrical property at a higher working temperature, and is suitable for working conditions of high temperature and high operating field strength. In addition, compared with the material in which small molecule additives are added, the grafting-modified polypropylene material of the invention avoids performance reduction caused by small molecule migration, and therefore has better stability.

Compared with the existing cable, the cable of the invention can still maintain and even have higher volume resistivity and stronger breakdown resistance at higher working temperature, and meanwhile, the mechanical property of the cable can also meet the requirements for cable use. Under the condition of ensuring the same voltage grade and insulation level, compared with the electrically insulating layer of conventional cable, the electrically insulating layer made of the grafting-modified polypropylene material has the advantages of thinner thickness, better heat dissipation, smaller weight and the like. Therefore, the cable has a wider application range.

A sixth aspect of the invention is to provide an insulating material characterized in that the insulating material comprises at least one grafting-modified polypropylene material described above.

Preferably, the content of the at least one grafting-modified polypropylene material is 20 to 100 wt%, preferably 40 to 100 wt%, more preferably 60 to 100 wt%, further preferably 80 to 100 wt%, and more further preferably 90 to 100 wt%, based on the weight of the insulating material.

Preferably, the insulating material further comprises additives such as one or more selected from antioxidants, stabilizers, processing aids, flame retardants, water tree retarding additives, acid or ion scavengers, inorganic fillers, voltage stabilizers and copper inhibitors. The types and amounts of additives used are conventional and known to those of ordinary skill in the art

Additionally, the invention also includes embodiments set forth in the following paragraphs.

Paragraph 1. A method for preparing an insulating material by using a grafting-modified polypropylene material, characterized in that the grafting-modified polypropylene material comprises structural units derived from a polypropylene copolymer and structural units derived from an alkenyl-containing polymerizable monomer; the content of the structural units derived from the alkenyl-containing polymerizable monomer and in a grafted state in the grafting-modified polypropylene material is 0.1 to 14 wt%, preferably 0.2 to 7.5 wt%, based on the weight of the grafting-modified polypropylene material;

the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

Paragraph 2. A method according to paragraph 1, wherein, the polypropylene copolymer has at least one of the following characteristics: the melt flow rate under a load of 2.16 kg at 230°C is 0.01 to 60 g/10 min, preferably 0.05 to 35 g/10 min, and more preferably 0.5 to 15 g/10 min. The melting temperature Tm is 100°C or higher, preferably 110 to 180°C, more preferably 110 to 170°C, more further preferably 120 to 170°C, and still more further preferably 120 to 166°C. The weight average molecular weight is preferably $20\times10^4$ to $60\times10^4$ g/mol.

Paragraph 3. A method according to paragraph 1 or 2, wherein, the comonomer of the polypropylene copolymer is at least one selected from $C_2$-$C_8$ alpha-olefins other than propylene; preferably, the comonomer of the polypropylene copolymer is at least one selected from ethylene, 1-butene, 1-pentene, 4-methyl-1 -pentene, 1-hexene, 1-heptene and 1-octene; further preferably, the comonomer of the polypropylene copolymer is ethylene and/or 1-butene; and still further preferably, the polypropylene copolymer consists of propylene and ethylene.

Paragraph 4. A method according to any one of paragraphs 1-3, wherein, the grafting-modified polypropylene material is prepared by a solid phase grafting reaction of a polypropylene copolymer and an alkenyl-containing polymerizable monomer.

Paragraph 5. A method according to any one of paragraphs 1-4, wherein, the grafting-modified polypropylene material has at least one of the following characteristics: the melt flow rate under a load of 2.16 kg at 230°C is 0.01 to

30 g/10 min, preferably 0.05 to 20 g/10 min, further preferably 0.1 to 10 g/10 min, and more preferably 0.2 to 8 g/10 min; the flexural modulus is 10 to 1250 MPa, preferably 20 to 1000 MPa, and more preferably 50 to 600 MPa; the elongation at break is ≥ 200%, preferably ≥ 300%.

Paragraph 6. A method according to any one of paragraphs 1-5, wherein, the grafting-modified polypropylene material has at least one of the following characteristics:

- the working temperature of the grafting-modified polypropylene material is ≥ 90°C, and preferably 90 to 160°C;
- the breakdown field strength $E_g$ at 90°C of the grafting-modified polypropylene material is ≥ 180 kV/mm, and preferably 180 to 800 kV/mm;
- the breakdown field strength change rate $\Delta E/E$, which is the difference $\Delta E$ between the breakdown field strength $E_g$ at 90°C of the grafting-modified polypropylene material and the breakdown field strength E at 90°C of the polypropylene copolymer divided by the breakdown field strength E at 90°C of the polypropylene copolymer, is greater than 0.7%, preferably 0.8 to 50%, more preferably 2 to 35%, and further preferably 5 to 25%;
- the direct current volume resistivity $\rho_{vg}$ at 90°C and 15 kV/mm field strength of the grafting-modified polypropylene material is ≥ $6\times10^{12}$ Ω.m, preferably $6\times10^{12}$ S2.m to $1.0\times10^{20}$ Q.m;
- the ratio $\rho_{vg}/\rho_v$ of the direct current volume resistivity $\rho_{vg}$ at 90°C and 15 kV/mm field strength of the grafting-modified polypropylene material to the direct current volume resistivity $\rho_v$ at 90°C and 15 kV/mm field strength of the polypropylene copolymer is greater than 1, preferably 1.1 to 50, more preferably 1.15 to 20, and further preferably 1.2 to 10.

Paragraph 7. A method according to any one of paragraphs 1-6, wherein, the alkenyl-containing polymerizable monomer is at least one selected from a monomer having the structure represented by formula 1,

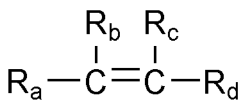
formula 1

In the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl.

Paragraph 8. A method according to paragraph 7, wherein, $R_b$, $R_c$, $R_d$ are each independently selected from H, substituted or unsubstituted $C_1$-$C_6$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano, substituted or unsubstituted $C_3$-$C_{20}$ silyl; the substituent group is halogen, hydroxy, amino, $C_1$-$C_{12}$ alkyl, $C_3$-$C_6$ cycloalkyl, $C_1$-$C_{12}$ alkoxy, $C_1$-$C_{12}$ acyloxy.

Paragraph 9. A method according to paragraph 7, wherein, $R_b$, $R_c$, $R_d$ are each independently selected from H, substituted or unsubstituted $C_1$-$C_6$ alkyl;
$R_a$ is selected from a group represented by formula 2, a group represented by formula 3, a group represented by formula 4, a group represented by formula 5, a group represented by formula 6, a combination of a group represented by formula 6 and a group represented by formula 7, a heterocyclic group;

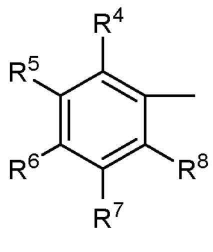
formula 2

In the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$

alkoxy;

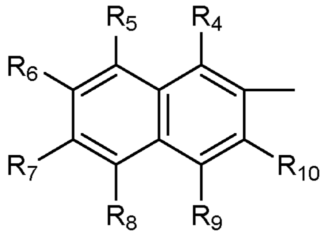

formula 3

In the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

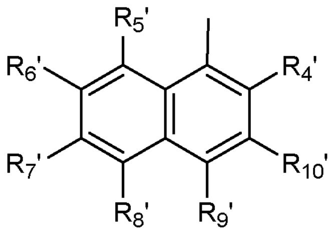

formula 4

In the formula 4, $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

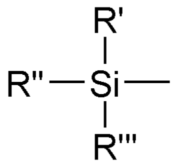

formula 5

In the formula 5, R', R", R‴ are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;

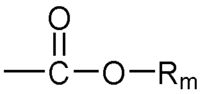

formula 6

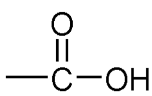

formula 7

In the formula 6, $R_m$ is selected from the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxy;

the heterocyclic group is selected from imidazolyl, pyrazolyl, carbazolyl, pyrrolidinonyl, pyridyl, piperidinyl, caprolactam

group, pyrazinyl, thiazolyl, purinyl, morpholinyl, oxazolinyl.

Paragraph 10. A method according to paragraph 7, wherein, the grafting-modified polypropylene material is an aromatic olefin grafting-modified polypropylene material, the alkenyl-containing polymerizable monomer is a styrenic monomer, and the content of the structural units derived from the styrenic monomer and in a grafted state in the aromatic olefin grafting-modified polypropylene material is 0.5 to 14 wt%, preferably 1 to 7.5 wt%, and more preferably 1.5 to 5 wt%, based on the weight of the aromatic olefin grafting-modified polypropylene material;
preferably, the styrenic monomer is at least one selected from a monomer having the structure represented by formula 8, a monomer having the structure represented by formula 9 and a monomer having the structure represented by formula 10;

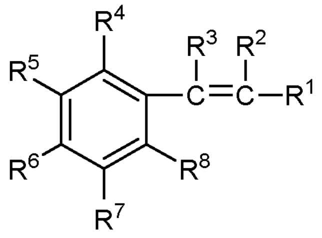

formula 8

In the formula 8, $R^1$, $R^2$, $R^3$ are each independently selected from H, substituted or unsubstituted $C_1$-$C_6$ alkyl; $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^1$, $R^2$, $R^3$ are each independently selected from H, substituted or unsubstituted $C_1$-$C_3$ alkyl, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

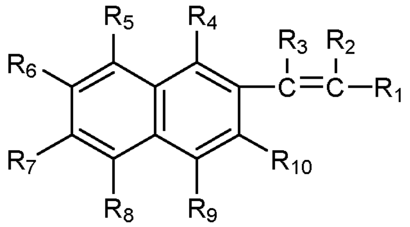

formula 9

In the formula 9, $R_1$, $R_2$, $R_3$ are each independently selected from H, substituted or unsubstituted $C_1$-$C_6$ alkyl; $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_1$, $R_2$, $R_3$ are each independently selected from H, substituted or unsubstituted $C_1$-$C_3$ alkyl, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

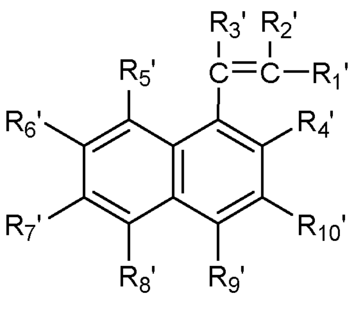

formula 10

In the formula 10, $R_1$', $R_2$', $R_3$' are each independently selected from H, substituted or unsubstituted $C_1$-$C_6$ alkyl; $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_1$', $R_2$', $R_3$' are each independently selected from H, substituted or unsubstituted $C_1$-$C_3$ alkyl, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

preferably, the styrenic monomer is at least one selected from styrene, α-methylstyrene, 1-vinyl naphthalene, 2-vinyl naphthalene, mono- or polysubstituted styrene, mono- or polysubstituted α-methylstyrene, mono- or polysubstituted 1-vinyl naphthalene and mono- or polysubstituted 2-vinyl naphthalene; the substituent group preferably is at least one selected from halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, Ci-Cs linear amine group and $C_3$-$C_8$ branched amine group or cyclic amine group;

more preferably, the styrenic monomer is at least one selected from styrene, α-methylstyrene, 2-methylstyrene, 3-methylstyrene and 4-methylstyrene.

Paragraph 11. A method according to paragraph 10, wherein, the aromatic olefin grafting-modified polypropylene material has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1250 MPa, preferably 20 to 1000 MPa, and more preferably 50 to 600 MPa; the elongation at break is ≥ 200%, preferably ≥ 300%.

Paragraph 12. A method according to paragraph 10, wherein, the aromatic olefin grafting-modified polypropylene material has at least one of the following characteristics:

- the working temperature of the aromatic olefin grafting-modified polypropylene material is ≥ 90°C, and preferably 90 to 160°C;
- the breakdown field strength $E_g$ at 90°C of the aromatic olefin grafting-modified polypropylene material is ≥ 200 kV/mm, and preferably 200 to 800 kV/mm;
- the difference ΔE between the breakdown field strength $E_g$ at 90°C of the aromatic olefin grafting-modified polypropylene material and the breakdown field strength E at 90°C of the polypropylene copolymer is divided by the breakdown field strength E at 90°C of the polypropylene copolymer to obtain a breakdown field strength change rate ΔE/E, which is greater than 1.5%, preferably 1.6 to 40%, more preferably 5 to 30%, and further preferably 10 to 20%;
- the direct current volume resistivity $\rho_{vg}$ at 90°C and 15 kV/mm field strength of the aromatic olefin grafting-modified polypropylene material is ≥ $1.0\times10^{13}$ Q.m, preferably $1.5\times10^{13}$ Q.m to $1.0\times10^{20}$ Q.m;
- the ratio $\rho_{vg}/\rho_v$ of the direct current volume resistivity $\rho_{vg}$ at 90°C and 15 kV/mm field strength of the aromatic olefin grafting-modified polypropylene material to the direct current volume resistivity $\rho_v$ at 90°C and 15 kV/mm field strength of the polypropylene copolymer is greater than 1, preferably 1.5 to 50, more preferably 2 to 20, and further preferably 3 to 10.

Paragraph 13. A method according to any one of paragraphs 1-12, wherein, the insulating material is a cable insulating material; preferably a direct current cable insulating material.

Paragraph 14. A method according to paragraph 13, wherein, the insulating material is a cable insulating layer material.

Additional features and advantages of the invention will be set forth in the detailed description of specific embodiments which follows.

**Mode of carrying out the invention**

The following is a detailed description of specific embodiments of the invention. It should be understood that the specific embodiments described herein are only to illustrate and explain, not to limit, the invention.

In the following examples and Comparative Examples:

**1. Determination of the comonomer content in the polypropylene copolymer:**

The comonomer content was determined by quantitative Fourier Transform Infrared (FTIR) spectroscopy. The

correlation of the determined comonomer content was calibrated by quantitative Nuclear Magnetic Resonance (NMR) spectroscopy. The calibration method based on the results obtained from quantitative $^{13}C$-NMR spectroscopy was carried out according to a conventional method in the art.

**2. Determination of the content of xylene solubles in the polypropylene copolymer, the comonomer content in the xylene solubles and the intrinsic viscosity ratio of the xylene solubles to the polypropylene copolymer:**

The determination was carried out using a CRYST-EX instrument from Polymer Char according to the following steps: dissolving with trichlorobenzene solvent by heating to 150°C, keeping the temperature for 90 min, sampling and testing, then cooling to 35°C, keeping the temperature for 70 min, sampling and testing.

**3. Determination of the weight average molecular weight of the polypropylene copolymer:**

The sample was dissolved in 1,2,4-trichlorobenzene at a concentration of 1.0 mg/ml and determined by high temperature GPC using PL-GPC 220 type gel permeation chromatograph from Polymer Laboratory. The determination temperature was 150°C and the solution flow rate was 1.0 ml/min. A standard curve was plotted by taking the molecular weight of polystyrene as an internal reference, and the molecular weight and molecular weight distribution of the sample were calculated according to the outflow time.

**4. Determination of the melt flow rate MFR:**

The determination was carried out at 230°C under a load of 2.16 kg using 7026 type melt index apparatus from CEAST, according to the method specified in GB/T3682-2018.

**5. Determination of the melting temperature Tm:**

The melting and crystallization processes of the material were analyzed by differential scanning calorimetry. The specific operation was as follows: under the protection of nitrogen, 5-10 mg of a sample was measured by a three-stage temperature rise and fall measurement method from 20°C to 200°C, and the melting and crystallization processes of the material were reflected by the change of heat flow, so that the melting temperature Tm was calculated.

**6. Determination of the grafting efficiency GE, the parameter M1:**

2-4 g of the grafting product was put into a Soxhlet extractor, and extracted with an organic solvent (ethyl acetate for aromatic olefin monomers, acrylate monomers and heterocyclic monomers; acetone for silane monomers) for 24 hours, unreacted monomers and homopolymers were removed, and a pure grafting product was obtained, which was dried and weighed. Then, the parameter M1 and the grafting efficiency GE were calculated.

The parameter M1 represents the content of the structural units derived from the alkenyl-containing polymerizable monomer and in a grafted state in the grafting-modified polypropylene material, and the calculation formulas of M1 and GE in the invention are as follows:

$$\mathrm{M1} = \frac{w_2 - w_0}{w_1} \times 100\%$$

$$GE = \frac{w_2 - w_0}{w_3} \times 100\%$$

In the above formulas, $w_0$ denotes the mass of the PP matrix; $w_1$ denotes the mass of the graft product before extraction; $w_2$ denotes the mass of the graft product after extraction; $w_3$ denotes the mass of the alkenyl-containing polymerizable monomer added.

**7. Determination of the direct current volume resistivity:**

The determination was carried out according to the method specified in GB/T 1410-2006.

**8. Determination of the breakdown field strength:**

The determination was carried out according to the method specified in GB/T1408-2006.

**9. Determination of the tensile Strength:**

The determination was carried out according to the method specified in GB/T1040.2-2006.

**10. Determination of the flexural modulus:**

The determination was carried out according to the method specified in GB/T9341-2008.

**11. Determination of the elongation at break:**

The determination was carried out according to the method specified in GB/T1040-2006.

**12. Determination of the dielectric constant and the dielectric dissipation factor:**

The determination was carried out according to the method specified in GB/T1409-2006.

**13. Determination of the main insulation conductivity (resistivity) ratio of the cable:**

The determination was carried out according to the method specified in appendix A of TICW 7.1-2012. The main insulation conductivity ratio of the cable is equal to the main insulation conductivity of the cable at 90°C divided by

the main insulation conductivity of the cable at 30°C.

**14. Determination of the electric field distortion rate:**

The insulation space charge injection test of the cable was performed according to the method specified in appendix B of TICW 7.1-2012.

**15. Determination of the direct current withstand voltage test:**

The cable was pressurized continuously at room temperature for 2 h with 1.85 times negative rated voltage. No breakdown and discharge phenomena denotes pass, otherwise fail.

**16. Determination of the load cycle:**

The cable at a rated service temperature was heated to 90°C, pressurized first with 1.85 times rated voltage for 8 h, and then naturally cooled with the removal of the voltage for 16 h. The cycle was performed for 12 days. No breakdown phenomenon denotes pass

Raw materials used in the examples are listed in Table A below.

Table A

| Name | Description |
|---|---|
| Polypropylene copolymer 1 | Self made with a reference to the method described in CN101679557A |
| Polypropylene copolymer 2 | Self made with a reference to the method described in CN101679557A |
| Polypropylene copolymer 3 | Self made with a reference to the method described in CN101679557A |
| Polypropylene | Self made with a reference to the method |
| copolymer 4 | described in CN101058654A |
| Polypropylene copolymer 5 | Self made with a reference to the method described in CN101058654A |
| Polypropylene copolymer 6 | Self made with a reference to the method described in CN101058654A |
| Polypropylene T30S | Polypropylene homopolymer, Sinopec Zhenhai Refining & Chemical Co., Ltd. |
| Dibenzoyl peroxide | J&K Chemicals |
| Lauroyl peroxide | J&K Chemicals |
| Tert-butyl peroxy(2-ethylhexanoate) | adamas-beta |
| Styrene | J&K Chemicals |
| p-methylstyrene | J&K Chemicals |
| Polystyrene GPPS-123 | Shanghai Secco Petrochemical Co., Ltd. |
| Vinyltriethoxysilane | J&K Chemicals |
| Vinyltriisopropoxysilane | J&K Chemicals |
| Vinyltrimethoxysilane | J&K Chemicals |
| Polyvinyltriethoxysilane | Self made in laboratory |
| Glycidyl methacrylate | J&K Chemicals |
| Methyl methacrylate | J&K Chemicals |
| Butyl acrylate | J&K Chemicals |
| Methyl acrylate | J&K Chemicals |
| Acrylic acid | J&K Chemicals |
| Poly(glycidyl methacrylate) | Sigma-Aldrich LLC |
| 4-vinylpyridine | J&K Chemicals |
| 1-vinylimidazole | J&K Chemicals |
| N-vinylpyrrolidone | J&K Chemicals |
| N-vinylcarbazole | J&K Chemicals |

(continued)

| Name | Description |
|---|---|
| Poly(4-vinylpyridine) | Sigma-Aldrich LLC |
| *Polypropylene copolymer 1: polypropylene copolymer used in Examples 1A, 1B, 1C, 1D, Comparative Examples 2A, 3A, 2B, 3B, 2C, 3C, 2D, 3D.<br>*Polypropylene copolymer 2: polypropylene copolymer used in Examples 2A, 2B, 2C, 2D.<br>*Polypropylene copolymer 3: polypropylene copolymer used in Examples 3A, 3B, 3C, 3D.<br>*Polypropylene copolymer 4: polypropylene copolymer used in Examples 4A, 4B, 4C, 4D.<br>*Polypropylene copolymer 5: polypropylene copolymer used in Examples 5A, 5B, 5C, 5D.<br>*Polypropylene copolymer 6: polypropylene copolymer used in Examples 6A, 6B, 6C, 6D. | |

## Example 1A

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/10min, Tm=143.4°C, the breakdown field strength at 90°C was 236 kV/mm, the direct current volume resistivity at 90°C and 15 kV/mm was 1.16E13 $\Omega\cdot$m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 2 g of dibenzoyl peroxide and 100 g of styrene were added, the reaction mixture was mixed with stirring for 60 min, swelled at 40°C for 4 h, heated to 95°C, and reacted for 4 h. After the end of the reaction, the reaction product was cooled by nitrogen purging, to obtain a polypropylene-g-styrene material product A1. Various performance parameters of the obtained product were tested, and the results are shown in Table 1.

## Example 2A

A basic polypropylene copolymer powder with the following characteristics was selected: the comonomer ethylene content was 14.7 wt%, the content of xylene solubles was 41.7 wt%, the comonomer content in the xylene solubles was 34.5 wt%, the intrinsic viscosity ratio of the xylene solubles to the polypropylene copolymer was 0.91, the weight average molecular weight was $36.6\times10^4$ g/mol, the MFR at 230°C under a load of 2.16 kg was 1.54 g/10min, Tm=164.9°C, the breakdown field strength at 90°C was 248 kV/mm, the direct current volume resistivity at 90°C and 15 kV/mm was 7.25E12 $\Omega\cdot$m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 2.8 g of lauroyl peroxide and 150 g of styrene were added, the reaction mixture was mixed with stirring for 60 min, swelled at 60°C for 2 h, heated to 90°C, and reacted for 4 h. After the end of the reaction, the reaction product was cooled by nitrogen purging, to obtain a polypropylene-g-styrene material product A2. Various performance parameters of the obtained product were tested, and the results are shown in Table 1.

## Example 3A

A basic polypropylene copolymer powder with the following characteristics was selected: the comonomer ethylene content was 20.1 wt%, the content of xylene solubles was 66.1 wt%, the comonomer content in the xylene solubles was 29.5 wt%, the intrinsic viscosity ratio of the xylene solubles to the polypropylene copolymer was 1.23, the weight average molecular weight was $53.8\times10^4$ g/mol, the MFR at 230°C under a load of 2.16 kg was 0.51 g/10min, Tm=142.5°C, the breakdown field strength at 90°C was 176 kV/mm, the direct current volume resistivity at 90°C and 15 kV/mm was 5.63E12 $\Omega\cdot$m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 1.5 g of lauroyl peroxide and 50 g of styrene were added, the reaction mixture was mixed with stirring for 60 min, swelled at 60°C for 2 h, heated to 85°C, and reacted for 4 h. After the end of the reaction, the reaction product was cooled by nitrogen purging, to obtain a polypropylene-g-styrene material product A3. Various performance parameters of the obtained product were tested, and the results are shown in Table 1.

**Example 4A**

A basic polypropylene copolymer powder with the following characteristics was selected: the comonomer ethylene content was 9.3 wt%, the content of xylene solubles was 21.0 wt%, the comonomer content in the xylene solubles was 35.4 wt%, the intrinsic viscosity ratio of the xylene solubles to the polypropylene copolymer was 1.68, the weight average molecular weight was $30.4\times10^4$ g/mol, the MFR at 230°C under a load of 2.16 kg was 5.69 g/10min, Tm=163.0°C, the breakdown field strength at 90°C was 288 kV/mm, the direct current volume resistivity at 90°C and 15 kV/mm was 1.32E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 7.0 g tert-butyl peroxy(2-ethylhexanoate) and 200 g styrene were added, the reaction mixture was mixed with stirring for 60 min, swelled at 60°C for 1 h, heated to 90°C, and reacted for 4 h. After the end of the reaction, the reaction product was cooled by nitrogen purging, to obtain a polypropylene-g-styrene material product A4. Various performance parameters of the obtained product were tested, and the results are shown in Table 1.

**Example 5A**

A basic polypropylene copolymer powder with the following characteristics was selected: the comonomer ethylene content was 4.8 wt%, the content of xylene solubles was 19.2 wt%, the comonomer content in the xylene solubles was 17.6 wt%, the intrinsic viscosity ratio of the xylene solubles to the polypropylene copolymer was 1.04, the weight average molecular weight was $29.2\times10^4$ g/mol, the MFR at 230°C under a load of 2.16 kg was 5.37 g/10min, Tm=163.3°C, the breakdown field strength at 90°C was 322 kV/mm, the direct current volume resistivity at 90°C and 15 kV/mm was 1.36E13Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 4.0 g of dibenzoyl peroxide was dissolved in 100 g of acetone, the resulting acetone solution was added to the reaction system, the reaction system was heated to 40°C, acetone was removed by nitrogen purging for 30 min, then 100 g of p-methylstyrene was added, the reaction mixture was mixed with stirring for 30 min, swelled at 60°C for 1 h, heated to 100°C, and reacted for 1 h. After the end of the reaction, the reaction product was cooled by nitrogen purging, to obtain a polypropylene-g-p-methylstyrene material product A5. Various performance parameters of the obtained product were tested, and the results are shown in Table 1.

**Example 6A**

A basic polypropylene copolymer powder with the following characteristics was selected: the comonomer ethylene content was 12.6 wt%, the content of xylene solubles was 30.6 wt%, the comonomer content in the xylene solubles was 43.6 wt%, the intrinsic viscosity ratio of the xylene solubles to the polypropylene copolymer was 1.84, the weight average molecular weight was $27.1\times10^4$ g/mol, the MFR at 230°C under a load of 2.16 kg was 8.46 g/10min, Tm=162.0°C, the breakdown field strength at 90°C was 261 kV/mm, the direct current volume resistivity at 90°C and 15 kV/mm was 9E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 3.0 g dibenzoyl peroxide was dissolved in 100 g of styrene and 100 g of an interfacial agent toluene, to form a solution, the solution was mixed with stirring for 30 min, swelled at 60°C for 0.5 h, 4 kg of a dispersant water was added, the reaction system was heated to 110°C, and reacted for 0.5 h. After the end of the reaction, the reaction product was cooled, filtered to remove the dispersant water, and dried under vacuum at 70°C for 10 h, to obtain a polypropylene-g-styrene material product A6. Various performance parameters of the obtained product were tested, and the results are shown in Table 1.

**Example 7A**

2.0 kg of the basic polypropylene copolymer powder of Example 1A was weighed, and added to a 10 L reaction kettle with a mechanical stirrer, the reaction system was sealed, and oxygen was removed by nitrogen replacement. 0.6 g of dibenzoyl peroxide and 30 g of styrene were added, the reaction mixture was mixed with stirring for 60 min, swelled at 40°C for 4 h, heated to 95°C, and reacted for 4 h. After the end of the reaction, the reaction product was cooled by nitrogen purging, to obtain a polypropylene-g-styrene material product A7. Various performance parameters of the obtained product were tested, and the results are shown in Table 1.

## Example 8A

2.0 kg of the basic polypropylene copolymer powder of Example 1A was weighed, and added to a 10 L reaction kettle with a mechanical stirrer, the reaction system was sealed, and oxygen was removed by nitrogen replacement. 4 g of dibenzoyl peroxide and 200 g of styrene were added, the reaction mixture was mixed with stirring for 60 min, swelled at 40°C for 4 h, heated to 95°C, and reacted for 4 h. After the end of the reaction, the reaction product was cooled by nitrogen purging, to obtain a polypropylene-g-styrene material product A8. Various performance parameters of the obtained product were tested, and the results are shown in Table 1.

## Comparative Example 1A

2.0 kg of T30S powder (the breakdown field strength at 90°C was 347 kV/mm, and the direct current volume resistivity at 90°C and 15 kV/mm was 1.18E13 Ω·m) material product was weighed, fine powder smaller than 40 meshes was removed by sieving, and added to a 10 L reaction kettle with a mechanical stirrer, the reaction system was sealed, and oxygen was removed by nitrogen replacement. 2 g of dibenzoyl peroxide and 100 g of styrene were added, the reaction mixture was mixed with stirring for 60 min, swelled at 40°C for 4 h, heated to 95°C, and reacted for 4 h. After the end of the reaction, the reaction product was cooled by nitrogen purging, to obtain a polypropylene-g-styrene material product CA1. Various performance parameters of the obtained product were tested, and the results are shown in Table 1.

## Comparative Example 2A

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/10min, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 12 g of dibenzoyl peroxide and 600 g of styrene were added, the reaction mixture was mixed with stirring for 60 min, swelled at 40°C for 4 h, heated to 95°C, and reacted for 4 h. After the end of the reaction, the reaction product was cooled by nitrogen purging, to obtain a polypropylene-g-styrene material product CA2. Various performance parameters of the obtained product were tested, and the results are shown in Table 1.

## Comparative Example 3A

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/10min, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and mixed with 100 g polystyrene GPPS-123 by a screw extruder, to obtain a blend CA3. Various performance parameters of the obtained product were tested, and the results are shown in Table 1.

## Example 1B

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/10min, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 2.5 g of lauroyl peroxide and 50 g of vinyltriethoxysilane were added, the reaction mixture was mixed with stirring for 30 min, swelled at 40°C for 1 h, heated to 90°C, and reacted for 4 h. After the end of the reaction, the reaction product was purged with nitrogen, and cooled to obtain a polypropylene-g-vinyltriethoxysilane material product B1. Various performance parameters of the obtained product were tested, and

the results are shown in Table 2.

## Example 2B

A basic polypropylene copolymer powder with the following characteristics was selected: the comonomer ethylene content was 14.7 wt%, the content of xylene solubles was 41.7 wt%, the comonomer content in the xylene solubles was 34.5 wt%, the intrinsic viscosity ratio of the xylene solubles to the polypropylene copolymer was 0.91, the weight average molecular weight was $36.6\times10^4$ g/mol, the MFR at 230°C under a load of 2.16 kg was 1.54 g/10min, Tm=164.9°C, the breakdown field strength at 90°C was 248 kV/mm, the direct current volume resistivity at 90°C and 15 kV/mm was 7.25E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 0.9 g of dibenzoyl peroxide and 20 g of vinyltriethoxysilane were added, the reaction mixture was mixed with stirring for 60 min, heated to 90°C, and reacted for 4 h. After the end of the reaction, the reaction product was purged with nitrogen, and cooled to obtain a polypropylene-g-vinyltriethoxysilane material product B2. Various performance parameters of the obtained product were tested, and the results are shown in Table 2.

## Example 3B

A basic polypropylene copolymer powder with the following characteristics was selected: the comonomer ethylene content was 20.1 wt%, the content of xylene solubles was 66.1 wt%, the comonomer content in the xylene solubles was 29.5 wt%, the intrinsic viscosity ratio of the xylene solubles to the polypropylene copolymer was 1.23, the weight average molecular weight was $53.8\times10^4$g/mol, the MFR at 230°C under a load of 2.16 kg was 0.51 g/10min, Tm=142.5°C, the breakdown field strength at 90°C was 176 kV/mm, the direct current volume resistivity at 90°C and 15 kV/mm was 5.63E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 6.0 g of lauroyl peroxide and 100 g of vinyltriethoxysilane were added, the reaction mixture was mixed with stirring for 60 min, swelled at 60°C for 1 h, heated to 90°C, and reacted for 4 h. After the end of the reaction, the reaction product was purged with nitrogen, and cooled to obtain a polypropylene-g-vinyltriethoxysilane material product B3. Various performance parameters of the obtained product were tested, and the results are shown in Table 2.

## Example 4B

A basic polypropylene copolymer powder with the following characteristics was selected: the comonomer ethylene content was 9.3 wt%, the content of xylene solubles was 21.0 wt%, the comonomer content in the xylene solubles was 35.4 wt%, the intrinsic viscosity ratio of the xylene solubles to the polypropylene copolymer was 1.68, the weight average molecular weight was $30.4\times10^4$ g/mol, the MFR at 230°C under a load of 2.16 kg was 5.69 g/10min, Tm=163.0°C, the breakdown field strength at 90°C was 288 kV/mm, the direct current volume resistivity at 90°C and 15 kV/mm was 1.32E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 4.5 g of tert-butyl peroxy(2-ethylhexanoate) and 120 g of vinyltriisopropoxysilane were added, the reaction mixture was mixed with stirring for 60 min, heated to 100°C, and reacted for 1.5 h. After the end of the reaction, the reaction product was purged with nitrogen, and cooled to obtain a polypropylene-g-vinyltriisopropoxysilane material product B4. Various performance parameters of the obtained product were tested, and the results are shown in Table 2.

## Example 5B

A basic polypropylene copolymer powder with the following characteristics was selected: the comonomer ethylene content was 4.8 wt%, the content of xylene solubles was 19.2 wt%, the comonomer content in the xylene solubles was 17.6 wt%, the intrinsic viscosity ratio of the xylene solubles to the polypropylene copolymer was 1.04, the weight average molecular weight was $29.2\times10^4$ g/mol, the MFR at 230°C under a load of 2.16 kg was 5.37 g/10min, Tm=163.3°C, the breakdown field strength at 90°C was 322 kV/mm, the direct current volume resistivity at 90°C and 15 kV/mm was 1.36E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 3.7 g of lauroyl peroxide was dissolved in 70 g of acetone, the resulting acetone solution was added to the reaction system, heated to 40°C, acetone was removed by nitrogen

purging for 30 min, then 75 g of vinyltriethoxysilane was added, the reaction mixture was mixed with stirring for 30 min, heated to 85°C, and reacted for 4 h. After the end of the reaction, the reaction product was purged with nitrogen, and cooled to obtain a polypropylene-g-vinyltriethoxysilane material product B5. Various performance parameters of the obtained product were tested, and the results are shown in Table 2.

### Example 6B

A basic polypropylene copolymer powder with the following characteristics was selected: the comonomer ethylene content was 12.6 wt%, the content of xylene solubles was 30.6 wt%, the comonomer content in the xylene solubles was 43.6 wt%, the intrinsic viscosity ratio of the xylene solubles to the polypropylene copolymer was 1.84, the weight average molecular weight was $27.1\times10^4$ g/mol, the MFR at 230°C under a load of 2.16 kg was 8.46 g/10min, Tm=162.0°C, the breakdown field strength at 90°C was 261 kV/mm, the direct current volume resistivity at 90°C and 15 kV/mm was 9E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 5.0 g of lauroyl peroxide was dissolved in 100 g of vinyltrimethoxysilane and 50 g of an interfacial agent toluene, to form a solution, the solution was mixed with stirring for 30 min, heated to 95°C, then 4 kg of a dispersant water was added at 95°C, and the reaction was carried out for 0.75 h. After the end of the reaction, the reaction product was cooled, filtered to remove the dispersant water, and dried under vacuum at 70°C for 10 h, to obtain a polypropylene-g-vinyltrimethoxysilane material product B6. Various performance parameters of the obtained product were tested, and the results are shown in Table 2.

### Example 7B

2.0 kg of the basic polypropylene copolymer powder of Example 1B was weighed, and added to a 10 L reaction kettle with a mechanical stirrer, the reaction system was sealed, and oxygen was removed by nitrogen replacement. 7.5 g of lauroyl peroxide and 175 g of vinyltriethoxysilane were added, the reaction mixture was mixed with stirring for 30 min, swelled at 40°C for 1 h, heated to 90°C, and reacted for 4 h. After the end of the reaction, the reaction product was purged with nitrogen, and cooled to obtain polypropylene-g-vinyltriethoxysilane material product B7. Various performance parameters of the obtained product were tested, and the results are shown in Table 2.

### Comparative Example 1B

2.0 kg of T30S powder (the breakdown field strength at 90°C was 347 kV/mm, and the direct current volume resistivity at 90°C and 15 kV/mm was 1.18E13 Ω·m) from which fines smaller than 40 meshes have been removed by sieving was weighed, and added to a 10 L reaction kettle with a mechanical stirrer, the reaction system was sealed, and oxygen was removed by nitrogen replacement. 2.5 g of lauroyl peroxide and 50 g of vinyltriethoxysilane were added, the reaction mixture was mixed with stirring for 60 min, swelled at 40°C for 1 h, heated to 90°C, and reacted for 4 h. After the end of the reaction, the reaction product was purged with nitrogen, and cooled to obtain polypropylene-g-vinyltriethoxysilane material product CB1. Various performance parameters of the obtained product were tested, and the results are shown in Table 2.

### Comparative Example 2B

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/10min, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 20 g of lauroyl peroxide and 400 g of vinyltriethoxysilane were added, the reaction mixture was mixed with stirring for 60 min, swelled at 40°C for 1 h, heated to 90°C, and reacted for 4 h. After the end of the reaction, the reaction product was cooled, to obtain a polypropylene-g-vinyltriethoxysilane material product CB2. Various performance parameters of the obtained product were tested, and the results are shown in Table 2.

## Comparative Example 3B

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3 \times 10^4$ g/mol, the MFR at 230°C under a load of 2.16 kg was 1.21 g/10min, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and mixed with 50 g of polyvinyltriethoxysilane by a screw extruder, to obtain a blend CB3. Various performance parameters of the obtained product were tested, and the results are shown in Table 2.

Preparation method of polyvinyltriethoxysilane: 10 g of lauroyl peroxide and 200 g of vinyltriethoxysilane were dispersed in 800 ml of deionized water, mixed with stirring, heated to 90°C, and reacted for 4 h. After the end of the reaction, the reaction system was cooled to room temperature, filtered and dried to obtain 125 g of polyvinyltriethoxysilane.

## Example 1C

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3 \times 10^4$ g/mol, the MFR at 230°C under a load of 2.16 kg was 1.21 g/10min, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 2.5 g of dibenzoyl peroxide and 80 g of glycidyl methacrylate were added, the reaction mixture was mixed with stirring for 30 min, heated to 90°C, and reacted for 4 h. After the end of the reaction, the reaction product was cooled by nitrogen purging, to obtain a polypropylene-g-glycidyl methacrylate material product C1. Various performance parameters of the obtained product were tested, and the results are shown in Table 3.

## Example 2C

A basic polypropylene copolymer powder with the following characteristics was selected: the comonomer ethylene content was 14.7 wt%, the content of xylene solubles was 41.7 wt%, the comonomer content in the xylene solubles was 34.5 wt%, the intrinsic viscosity ratio of the xylene solubles to the polypropylene copolymer was 0.91, the weight average molecular weight was $36.6 \times 10^4$ g/mol, the MFR at 230°C under a load of 2.16 kg was 1.54 g/10min, Tm=164.9 °C, the breakdown field strength at 90°C was 248 kV/mm, the direct current volume resistivity at 90°C and 15 kV/mm was 7.25E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 1.2 g of dibenzoyl peroxide and 40 g of glycidyl methacrylate were added, the reaction mixture was mixed with stirring for 30 min, heated to 95°C, and reacted for 4 h. After the end of the reaction, the reaction product was cooled by nitrogen purging, to obtain a polypropylene-g-glycidyl methacrylate material product C2. Various performance parameters of the obtained product were tested, and the results are shown in Table 3.

## Example 3C

A basic polypropylene copolymer powder with the following characteristics was selected: the comonomer ethylene content was 20.1 wt%, the content of xylene solubles was 66.1 wt%, the comonomer content in the xylene solubles was 29.5 wt%, the intrinsic viscosity ratio of the xylene solubles to the polypropylene copolymer was 1.23, the weight average molecular weight was $53.8 \times 10^4$g/mol, the MFR at 230°C under a load of 2.16 kg was 0.51 g/10min, Tm=142.5°C, the breakdown field strength at 90°C was 176 kV/mm, the direct current volume resistivity at 90°C and 15 kV/mm was 5.63E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 3.5 g of dibenzoyl peroxide and 125 g of glycidyl methacrylate were added, the reaction mixture was mixed with stirring for 30 min, heated to 90°C, and reacted for 4 h. After the end of the reaction, the reaction product was cooled by nitrogen purging, to obtain a polypropylene-g-glycidyl methacrylate material product C3. Various performance parameters of the obtained product were tested, and the results are shown in Table 3.

## Example 4C

A basic polypropylene copolymer powder with the following characteristics was selected: the comonomer ethylene content was 9.3 wt%, the content of xylene solubles was 21.0 wt%, the comonomer content in the xylene solubles was 35.4 wt%, the intrinsic viscosity ratio of the xylene solubles to the polypropylene copolymer was 1.68, the weight average molecular weight was $30.4\times10^4$ g/mol, the MFR at 230°C under a load of 2.16 kg was 5.69 g/10min, Tm=163.0°C, the breakdown field strength at 90°C was 288 kV/mm, the direct current volume resistivity at 90°C and 15 kV/mm was 1.32E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 2.8 g of tert-butyl peroxy(2-ethylhexanoate) and 100 g of methyl methacrylate were added, the reaction mixture was mixed with stirring for 30 min, heated to 95°C, 3.0 kg of a dispersant deionized water was added at 95°C, and the reaction was carried out for 4 h. After the end of the reaction, the reaction product was filtered to remove the dispersant water, dried under vacuum at 70°C for 10 h, and cooled, to obtain a polypropylene-g-methyl methacrylate material product C4. Various performance parameters of the obtained product were tested, and the results are shown in Table 3.

## Example 5C

A basic polypropylene copolymer powder with the following characteristics was selected: the comonomer ethylene content was 4.8 wt%, the content of xylene solubles was 19.2 wt%, the comonomer content in the xylene solubles was 17.6 wt%, the intrinsic viscosity ratio of the xylene solubles to the polypropylene copolymer was 1.04, the weight average molecular weight was $29.2\times10^4$ g/mol, the MFR at 230°C under a load of 2.16 kg was 5.37 g/10min, Tm=163.3°C, the breakdown field strength at 90°C was 322 kV/mm, the direct current volume resistivity at 90°C and 15 kV/mm was 1.36E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 1.3 g of dibenzoyl peroxide was dissolved in 70g of acetone, the resulting acetone solution was added to the reaction system, heated to 40°C, acetone was removed by nitrogen purging for 30 min, then 50 g of butyl acrylate was added, the reaction mixture was mixed with stirring for 30 min, heated to 100°C, and reacted for 1 h. After the end of the reaction, the reaction product was cooled by nitrogen purging, to obtain a polypropylene-g-butyl acrylate material product C5. Various performance parameters of the obtained product were tested, and the results are shown in Table 3.

## Example 6C

A basic polypropylene copolymer powder with the following characteristics was selected: the comonomer ethylene content was 12.6 wt%, the content of xylene solubles was 30.6 wt%, the comonomer content in the xylene solubles was 43.6 wt%, the intrinsic viscosity ratio of the xylene solubles to the polypropylene copolymer was 1.84, the weight average molecular weight was $27.1\times10^4$ g/mol, the MFR at 230°C under a load of 2.16 kg was 8.46 g/10min, Tm=162.0°C, the breakdown field strength at 90°C was 261 kV/mm, the direct current volume resistivity at 90°C and 15 kV/mm was 9E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 0.8 g of lauroyl peroxide was dissolved in 30 g of methyl methacrylate and 40 g of an interfacial agent toluene, to form a solution, the solution was mixed with stirring for 30 min, heated to 85°C, 4 kg of a dispersant water was added at 85°C, and the reaction was carried out for 1.5 h. After the end of the reaction, the reaction product was cooled, filtered to remove the dispersant water, and dried under vacuum at 70°C for 10 h, to obtain a polypropylene-g-methyl methacrylate material product C6. Various performance parameters of the obtained product were tested, and the results are shown in Table 3.

## Example 7C

2.0 kg of the basic polypropylene copolymer powder of Example 1C was weighed, and added to a 10 L reaction kettle with a mechanical stirrer, the reaction system was sealed, and oxygen was removed by nitrogen replacement. 5.0 g of dibenzoyl peroxide and 180 g of glycidyl methacrylate were added, the reaction mixture was mixed with stirring for 30 min, swelled at 40°C for 1 h, heated to 90°C, and reacted for 4 h. After the end of the reaction, the reaction product was cooled by nitrogen purging, to obtain a polypropylene-g-glycidyl methacrylate material product C7. Various performance parameters of the obtained product were tested, and the results are shown in Table 3.

## Example 8C

2.0 kg of the basic polypropylene copolymer powder of Example 1C was weighed, and added to a 10 L reaction kettle with a mechanical stirrer, the reaction system was sealed, and oxygen was removed by nitrogen replacement. 1.5 g of dibenzoyl peroxide, 40 g of methyl acrylate and 10 g of acrylic acid were added, the reaction mixture was mixed with stirring for 30 min, heated to 90°C, and reacted for 4 h. After the end of the reaction, the reaction product was cooled by nitrogen purging, to obtain a polypropylene-g-methyl acrylate/acrylic acid material product C8. Various performance parameters of the obtained product were tested, and the results are shown in Table 3.

## Comparative Example 1C

2.0 kg of T30S powder (the breakdown field strength at 90°C was 347 kV/mm, and the direct current volume resistivity at 90°C and 15 kV/mm was 1.18E13 Ω·m) from which fine powder smaller than 40 meshes has been removed by sieving was weighed, and added to a 10 L reaction kettle with a mechanical stirrer, the reaction system was sealed, and oxygen was removed by nitrogen replacement. 2.5 g of dibenzoyl peroxide and 80 g of glycidyl methacrylate were added, the reaction mixture was mixed with stirring for 60 min, heated to 90°C, and reacted for 4 h. After the end of the reaction, the reaction product was cooled by nitrogen purging, to obtain a polypropylene-g-glycidyl methacrylate product CC1. Various performance parameters of the obtained product were tested, and the results are shown in Table 3.

## Comparative Example 2C

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/lOmin, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 6 g of dibenzoyl peroxide and 225 g of glycidyl methacrylate were added, the reaction mixture was mixed with stirring for 60 min, heated to 90°C, and reacted for 4 h. After the end of the reaction, the reaction product was cooled by nitrogen purging, to obtain a polypropylene-g-glycidyl methacrylate material product CC2. Various performance parameters of the obtained product were tested, and the results are shown in Table 3.

## Comparative Example 3C

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/lOmin, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 500 g of the above basic polypropylene copolymer powder was weighed, and mixed with 20 g poly(glycidyl methacrylate) by a screw extruder, to obtain a blend CC3. Various performance parameters of the obtained product were tested, and the results are shown in Table 3.

## Example 1D

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/lOmin, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 1.2 g of dibenzoyl peroxide and 40 g of 4-vinylpyridine were added, the reaction mixture was mixed with stirring for 30 min, swelled at 50°C for 30 min, heated to 90°C, and reacted for 4 h. After the end of the reaction, the reaction product was cooled by nitrogen purging, to obtain a polypropylene-g-4-vinylpyridine material product D1. Various performance parameters of the obtained product were tested, and the results

are shown in Table 4.

**Example 2D**

A basic polypropylene copolymer powder with the following characteristics was selected: the comonomer ethylene content was 14.7 wt%, the content of xylene solubles was 41.7 wt%, the comonomer content in the xylene solubles was 34.5 wt%, the intrinsic viscosity ratio of the xylene solubles to the polypropylene copolymer was 0.91, the weight average molecular weight was $36.6\times10^4$ g/mol, the MFR at 230°C under a load of 2.16 kg was 1.54 g/lOmin, Tm=164.9°C, the breakdown field strength at 90°C was 248 kV/mm, the direct current volume resistivity at 90°C and 15 kV/mm was 7.25E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 2.2 g of dibenzoyl peroxide and 100 g of 4-vinylpyridine were added, the reaction mixture was mixed with stirring for 30 min, swelled at 50°C for 60 min, heated to 95°C, and reacted for 4 h. After the end of the reaction, the reaction product was cooled by nitrogen purging, to obtain a polypropylene-g-4-vinylpyridine material product D2. Various performance parameters of the obtained product were tested, and the results are shown in Table 4.

**Example 3D**

A basic polypropylene copolymer powder with the following characteristics was selected: the comonomer ethylene content was 20.1 wt%, the content of xylene solubles was 66.1 wt%, the comonomer content in the xylene solubles was 29.5 wt%, the intrinsic viscosity ratio of the xylene solubles to the polypropylene copolymer was 1.23, the weight average molecular weight was $53.8\times10^4$g/mol, the MFR at 230°C under a load of 2.16 kg was 0.51 g/lOmin, Tm=142.5°C, the breakdown field strength at 90°C was 176 kV/mm, the direct current volume resistivity at 90°C and 15 kV/mm was 5.63E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 4.5 g of dibenzoyl peroxide and 150 g of 4-vinylpyridine were added, the reaction mixture was mixed with stirring for 30 min, swelled at 50°C for 30 min, heated to 90°C, and reacted for 4 h. After the end of the reaction, the reaction product was cooled by nitrogen purging, to obtain a polypropylene-g-4-vinylpyridine material product D3. Various performance parameters of the obtained product were tested, and the results are shown in Table 4.

**Example 4D**

A basic polypropylene copolymer powder with the following characteristics was selected: the comonomer ethylene content was 9.3 wt%, the content of xylene solubles was 21.0 wt%, the comonomer content in the xylene solubles was 35.4 wt%, the intrinsic viscosity ratio of the xylene solubles to the polypropylene copolymer was 1.68, the weight average molecular weight was $30.4\times10^4$ g/mol, the MFR at 230°C under a load of 2.16 kg was 5.69 g/lOmin, Tm=163.0°C, the breakdown field strength at 90°C was 288 kV/mm, the direct current volume resistivity at 90°C and 15 kV/mm was 1.32E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 2 g of tert-butyl peroxy(2-ethylhexanoate) and 40 g of 1-vinyl imidazole were added, the reaction mixture was mixed with stirring for 30 min, swelled at 55°C for 2 h, heated to 95°C, and reacted for 4 h. After the end of the reaction, the reaction product was cooled by nitrogen purging, to obtain a polypropylene-g-1-vinyl imidazole material product D4. Various performance parameters of the obtained product were tested, and the results are shown in Table 4.

**Example 5D**

A basic polypropylene copolymer powder with the following characteristics was selected: the comonomer ethylene content was 4.8 wt%, the content of xylene solubles was 19.2 wt%, the comonomer content in the xylene solubles was 17.6 wt%, the intrinsic viscosity ratio of the xylene solubles to the polypropylene copolymer was 1.04, the weight average molecular weight was $29.2\times10^4$ g/mol, the MFR at 230°C under a load of 2.16 kg was 5.37 g/lOmin, Tm=163.3°C, the breakdown field strength at 90°C was 322 kV/mm, the direct current volume resistivity at 90°C and 15 kV/mm was 1.36E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 3 g of dibenzoyl peroxide was dissolved in 100 g of acetone, the resulting acetone solution was added to the reaction system, heated to 40°C, acetone was removed by nitrogen

purging for 30 min, then 60 g pf N-vinylpyrrolidone, the reaction mixture was mixed with stirring for 30 min, heated to 100°C, and reacted for 1 h. After the end of the reaction, the reaction product was cooled, to obtain a polypropylene-g-N-vinylpyrrolidone material product D5. Various performance parameters of the obtained product were tested, and the results are shown in Table 4.

**Example 6D**

A basic polypropylene copolymer powder with the following characteristics was selected: the comonomer ethylene content was 12.6 wt%, the content of xylene solubles was 30.6 wt%, the comonomer content in the xylene solubles was 43.6 wt%, the intrinsic viscosity ratio of the xylene solubles to the polypropylene copolymer was 1.84, the weight average molecular weight was $27.1\times10^4$ g/mol, the MFR at 230°C under a load of 2.16 kg was 8.46 g/lOmin, Tm=162.0°C, the breakdown field strength at 90°C was 261 kV/mm, the direct current volume resistivity at 90°C and 15 kV/mm was 9E12 $\Omega\cdot$m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 7 g of lauroyl peroxide and 160 g of N-vinylcarbazole were dissolved in 500 g of an interfacial agent toluene, to form a solution, the solution was added to the reaction kettle, the reaction mixture was mixed with stirring for 30 min, heated to 95°C, 3 kg of a dispersant water was added at 95°C, and the reaction was carried out for 3 h. After the end of the reaction, the reaction product was cooled, filtered to remove the dispersant water, and dried under vacuum at 70°C for 10 h, to obtain a polypropylene-g-N-vinylcarbazole material product D6. Various performance parameters of the obtained product were tested, and the results are shown in Table 4.

**Example 7D**

2.0 kg of the basic polypropylene copolymer powder of Example 1D was weighed, and added to a 10 L reaction kettle with a mechanical stirrer, the reaction system was sealed, and oxygen was removed by nitrogen replacement. 4.5 g of dibenzoyl peroxide and 200 g of 4-vinylpyridine were added, the reaction mixture was mixed with stirring for 30 min, swelled at 50°C for 30 min, heated to 90°C, and reacted for 4 h. After the end of the reaction, the reaction product was cooled by nitrogen purging, to obtain a polypropylene-g-4-vinylpyridine material product D7. Various performance parameters of the obtained product were tested, and the results are shown in Table 4.

**Comparative Example 1D**

2.0 kg of T30S powder (the breakdown field strength at 90°C was 347 kV/mm, and the direct current volume resistivity at 90°C and 15 kV/mm was 1.18E13 $\Omega\cdot$m) from which fine powder smaller than 40 meshes has been removed by sieving was weighed, and added to a 10 L reaction kettle with a mechanical stirrer, the reaction system was sealed, and oxygen was removed by nitrogen replacement. 1.2 g of dibenzoyl peroxide and 40 g of 4-vinylpyridine were added, the reaction mixture was mixed with stirring for 30 min, swelled at 50°C for 30 min, heated to 90°C, and reacted for 4 h. After the end of the reaction, the reaction product was cooled by nitrogen purging, to obtain a polypropylene-g-4-vinylpyridine material product CD1. Various performance parameters of the obtained product were tested, and the results are shown in Table 4.

**Comparative Example 2D**

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/lOmin, Tm=143.4°C, the breakdown field strength at 90°C was 236 kV/mm, the direct current volume resistivity at 90°C and 15 kV/mm was 1.16E13 $\Omega\cdot$m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 7.5 g of dibenzoyl peroxide and 300 g of 4-vinylpyridine were added, the reaction mixture was mixed with stirring for 30 min, swelled at 50°C for 30 min, heated to 90°C, and reacted for 4 h. After the end of the reaction, the reaction product was cooled by nitrogen purging, to obtain a polypropylene-g-4-vinylpyridine material product CD2. Various performance parameters of the obtained product were tested, and the results are shown in Table 4.

**Comparative Example 3D**

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/lOmin, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2000 g of the above basic polypropylene copolymer powder was weighed, and mixed with 40 g of poly(4-vinylpyridine) by a screw extruder, to obtain a blend CD3. Various performance parameters of the obtained product were tested, and the results are shown in Table 4.

Table 1

| | M1 | MFR | Grafting efficiency | Tensile strength MPa | Elongation at break | Flexural modulus MPa | The breakdown field strength $E_g$ at 90°C kV/mm | ΔE/E (90°C) (%) | $\rho_{vg}$ (90 °C, 15kV/nun) (Ω·m) | $\rho_{vg}/\rho_v$ (90 °C, 15kV/mm) | Dielectric constant (50Hz, 90 °C) | Dielectric loss (50Hz, 90°C) |
|---|---|---|---|---|---|---|---|---|---|---|---|---|
| A1 | 2.91% | 0.75 | 61% | 12.7 | >300% | 190 | 278 | 17.8 | 5.11E+13 | 4.41 | 2.2 | 4.00E-03 |
| A2 | 4.05% | 1.26 | 58% | 15.9 | >300% | 460 | 283 | 14.1 | 2.52E+13 | 3.48 | 2.2 | 3.90E-03 |
| A3 | 1.61% | 0.45 | 66% | 20.2 | >300% | 90 | 204 | 15.9 | 1.83E+13 | 3.25 | 2.1 | 4.10E-03 |
| A4 | 4.74% | 6.37 | 52% | 24.0 | >300% | 1250 | 320 | 11.1 | 1.08E+14 | 8.18 | 2.2 | 2.50E-03 |
| A5 | 2.48% | 3.98 | 52% | 23.4 | >300% | 740 | 361 | 12.1 | 1.13E+14 | 8.31 | 2.2 | 2.40E-03 |
| A6 | 1.91% | 6.57 | 40% | 22.3 | >300% | 890 | 301 | 15.3 | 6.50E+13 | 7.22 | 2.2 | 3.20E-03 |
| A7 | 0.81% | 1.03 | 55% | 12.6 | >300% | 190 | 240 | 1.70 | 3.52E+13 | 3.03 | 2.1 | 3.90E-03 |
| A8 | 5.64% | 0.64 | 62% | 13.0 | >300% | 230 | 260 | 10.2 | 3.87E+13 | 3.34 | 2.1 | 4.00E-03 |
| CA1 | 2.14% | 2.36 | 45% | 36.8 | >300% | 1770 | 435 | 25.4 | 1.89E+14 | 16.02 | 2.2 | 1.00E-03 |
| CA2 | 14.57% | 0.25 | 63% | 13.2 | 120% | 260 | 221 | -6.4 | 1.05E+13 | 0.91 | 2.2 | 4.10E-03 |
| CA3 | - | 1.25 | - | 13.2 | >300% | 200 | 190 | -19.5 | 9.56E+12 | 0.82 | 2.2 | 4.30E-03 |

Notes: M1 represents the content of the structural units derived from the styrenic monomer and in a grafted state in the grafting-modified polypropylene material.

The breakdown field strength change rate $\Delta E/E$ refers to a ratio of the difference $\Delta E$ between the breakdown field strength $E_g$ at 90°C of the aromatic olefin grafting-modified polypropylene material product and the breakdown field strength E at 90°C of the basic polypropylene copolymer powder to the breakdown field strength E at 90°C of the basic polypropylene copolymer powder, multiplied by 100%.

$\rho_{vg}$ refers to the direct current volume resistivity at 90°C and 15 kV/mm field strength of the aromatic olefin grafting-modified polypropylene material product, $\rho_{vg}/\rho_v$ refers to a ratio of the direct current volume resistivity $\rho_{vg}$ at 90°C and 15 kV/mm field strength of the aromatic olefin grafting-modified polypropylene material product to the direct current volume resistivity $\rho_v$ at 90°C and 15 kV/mm field strength of the basic polypropylene copolymer powder.

Table 2

| | M1 | MFR | Grafting efficiency | Tensile strength MPa | Elongation at break | Flexural modulus MPa | The breakdown field strength $E_g$ at 90°C kV/mm | ΔE/E (90°C) (%) | $\rho_{vg}$ (90°C, 15kV/mm) Ω·m | $\rho_{vg}/\rho_v$ (90°C, 15kV/mm) | Dielectric constant (50Hz, 90 °C) | Dielectric loss (50Hz, 90°C) |
|---|---|---|---|---|---|---|---|---|---|---|---|---|
| B1 | 1.03% | 1.15 | 42% | 12.6 | >300% | 160 | 269 | 14.0 | 1.61E+13 | 1.39 | 2.2 | 4.2E-3 |
| B2 | 0.45% | 1.26 | 45% | 15.6 | >300% | 400 | 277 | 11.7 | 9.89E+12 | 1.36 | 2.2 | 3.9E-3 |
| B3 | 2.43% | 0.59 | 51% | 19.5 | >300% | 80 | 201 | 142 | 6.83E+12 | 1.21 | 2.1 | 4.2E-3 |
| B4 | 2.11% | 8.51 | 37% | 21.7 | >300% | 850 | 311 | 8.0 | 1.82E+13 | 1.38 | 2.2 | 3.0E-3 |
| B5 | 1.24% | 4.77 | 34% | 21.6 | >300% | 600 | 351 | 9.0 | 1.74E+13 | 1.28 | 2.2 | 2.7E-3 |
| B6 | 1.42% | 8.31 | 29% | 20.1 | >300% | 720 | 289 | 10.7 | 1.52E+13 | 1.69 | 2.2 | 3.5E-3 |
| B7 | 3.24% | 1.03 | 40% | 11.8 | >300% | 150 | 238 | 0.8 | 1.35E+13 | 1.16 | 2.1 | 4.5E-3 |
| CB1 | 0.51% | 3.71 | 21% | 33.5 | >300% | 1320 | 402 | 15.9 | 1.43E+13 | 1.21 | 2.2 | 1.3E-3 |
| CB2 | 6.27% | 1.45 | 37% | 10.4 | >300% | 100 | 222 | -5.9 | 8.75E+12 | 0.75 | 2.0 | 4.7E-3 |
| CB3 | - | 1.65 | - | 12.7 | >300% | 170 | 197 | -16.5 | 4.64E+12 | 0.40 | 2.1 | 4.8E-3 |

Notes: M1 represents the content of the structural units derived from the alkenyl-containing silane monomer and in a grafted state in the silane-modified polypropylene graft.

The breakdown field strength change rate ΔE/E refers to a ratio of the difference ΔE between the breakdown field strength $E_g$ at 90°C of the silane-modified polypropylene graft product and the breakdown field strength E at 90°C of the basic polypropylene copolymer powder to the breakdown field strength E at 90°C of the basic polypropylene copolymer powder, multiplied by 100%.

$\rho_{vg}$ refers to the direct current volume resistivity at 90°C and 15 kV/mm field strength of the silane-modified polypropylene graft product, $\rho_{vg}/\rho_v$ refers to a ratio of the direct current volume resistivity $\rho_{vg}$ at 90°C and 15 kV/mm field strength of the silane-modified polypropylene graft product to the direct current volume resistivity $\rho_v$ at 90°C and 15 kV/mm field strength of the basic polypropylene copolymer powder.

Table 3

| | M1 | MFR | Grafting efficiency | Tensile strength MPa | Elongation at break | Flexural modulus MPa | The breakdown field strength $E_g$ at 90°C kV/mm | $\Delta E/E$ (90°C) (%) | $\rho_{vg}$ (90°C, 15kV/mm) ($\Omega \cdot m$) | $\rho_{vg}/\rho_v$ (90°C, 15kV/mm) | Dielectric constant (50Hz, 90 °C) | Dielectric loss (50Hz, 90°C) |
|---|---|---|---|---|---|---|---|---|---|---|---|---|
| C1 | 2.96% | 0.49 | 77% | 12.7 | >300% | 200 | 270 | 14.4 | 3.93E+13 | 3.39 | 2.2 | 4.2E-3 |
| C2 | 1.37% | 0.88 | 72% | 15.6 | >300% | 440 | 270 | 8.9 | 2.53E+13 | 3.49 | 2.2 | 4.0E-3 |
| C3 | 4.89% | 0.18 | 83% | 19.5 | >300% | 100 | 187 | 6.3 | 1.56E+13 | 2.77 | 2.1 | 4.4E-3 |
| C4 | 4.05% | 5.47 | 85% | 23.7 | >300% | 1100 | 357 | 24.0 | 7.50E+13 | 5.68 | 2.0 | 6.0E-3 |
| C5 | 2.22% | 4.77 | 91% | 23.0 | >300% | 700 | 363 | 12.7 | 6.60E+13 | 4.85 | 2.1 | 5.8E-3 |
| C6 | 1.21% | 8.03 | 82% | 22.0 | >300% | 830 | 312 | 19.5 | 3.89E+13 | 4.32 | 2.1 | 5.5E-3 |
| C7 | 6.04% | 0.24 | 73% | 12.1 | >300% | 210 | 242 | 2.5 | 2.17E+13 | 1.87 | 2.2 | 4.3E-3 |
| C8 | 1.71% | 0.74 | 70% | 12.7 | >300% | 200 | 248 | 5.1 | 5.51E+13 | 4.75 | 2.1 | 6.6E-3 |
| CC1 | 2.74% | 1.95 | 71% | 36.3 | >300% | 1800 | 442 | 27.4 | 5.15E+13 | 4.36 | 2.1 | 1.4E-3 |
| CC2 | 7.93% | 0.11 | 78% | 11.9 | >300% | 220 | 211 | -10.6 | 9.34E+12 | 0.81 | 2.1 | 4.5E-3 |
| CC3 | - | 1.20 | - | 12.7 | >300% | 190 | 191 | -19.1 | 7.75E+12 | 0.67 | 2.2 | 4.7E-3 |

Notes: M1 represents the content of the structural units derived from the acrylate monomer and the optional acrylic monomer and in a grafted state in the grafting-modified polypropylene material.

The breakdown field strength change rate $\Delta E/E$ refers to a ratio of the difference $\Delta E$ between the breakdown field strength $E_g$ at 90°C of the grafting-modified polypropylene material product and the breakdown field strength E at 90°C of the basic polypropylene copolymer powder to the breakdown field strength E at 90°C of the basic polypropylene copolymer powder, multiplied by 100%.

$\rho_{vg}$ refers to the direct current volume resistivity at 90°C and 15 kV/mm field strength of the grafting-modified polypropylene material product, $\rho_{vg}/\rho_v$ refers to a ratio of the direct current volume resistivity $\rho_{vg}$ at 90°C and 15 kV/mm field strength of the grafting-modified polypropylene material product to the direct current volume resistivity $\rho_v$ at 90°C and 15 kV/mm field strength of the basic polypropylene copolymer powder.

Table 4

| | M1 | MFR | Grafting efficiency | Tensile strength MPa | Elongation at break % | Flexural modulus MPa | The breakdown field strength $E_g$ at 90°C kV/mm | ΔE/E (90°C) (%) | $\rho_{vg}$ (90°C, 15kV/mm) Q·m | $\rho_{vg}/\rho_v$ (90°C, 15kV/mm) | Dielectric constant (50Hz, 90 °C) | Dielectric loss (50Hz, 90°C) |
|---|---|---|---|---|---|---|---|---|---|---|---|---|
| D1 | 0.92% | 0.89 | 47% | 12.7 | >300% | 190 | 261 | 10.6 | 1.75E+13 | 1.51 | 2.2 | 3.90E-03 |
| D2 | 2.39% | 0.82 | 50% | 15.6 | >300% | 440 | 276 | 11.3 | 1.03E+13 | 1.42 | 2.1 | 3.90E-03 |
| D3 | 3.92% | 0.11 | 58% | 20.1 | >300% | 110 | 195 | 10.8 | 7.37E+12 | 1.31 | 2.0 | 4.10E-03 |
| D4 | 0.75% | 6.56 | 38% | 23.7 | >300% | 1000 | 355 | 23.3 | 4.63E+13 | 3.51 | 2.2 | 2.20E-03 |
| D5 | 1.09% | 5.07 | 37% | 22.8 | >300% | 650 | 342 | 6.2 | 3.42E+13 | 2.51 | 2.2 | 2.40E-03 |
| D6 | 3.45% | 7.98 | 46% | 21.2 | >300% | 810 | 309 | 18.4 | 2.50E+13 | 2.78 | 2.1 | 3.20E-03 |
| D7 | 4.93% | 0.74 | 54% | 13.1 | >300% | 230 | 240 | 1.7 | 1.20E+13 | 1.03 | 2.0 | 3.90E-03 |
| CD1 | 0.86% | 1.79 | 44% | 36.1 | >300% | 1650 | 386 | 11.2 | 8.50E+13 | 7.20 | 2.2 | 1.10E-03 |
| CD2 | 6.68% | 0.05 | 51% | 13.1 | >300% | 250 | 205 | -13.1 | 7.48E+12 | 0.64 | 2.0 | 4.10E-03 |
| CD3 | - | 1.10 | - | 12.7 | >300% | 190 | 198 | -16.1 | 4.33E+12 | 0.37 | 2.0 | 4.20E-03 |

Notes: M1 represents the content of the structural units derived from the alkenyl-containing heterocyclic monomer and in a grafted state in the heterocycle grafting-modified polypropylene material.

The breakdown field strength change rate $\Delta E/E$ refers to a ratio of the difference $\Delta E$ between the breakdown field strength $E_g$ at 90°C of the heterocycle grafting-modified polypropylene material product and the breakdown field strength E at 90°C of the basic polypropylene copolymer powder to the breakdown field strength E at 90°C of the basic polypropylene copolymer powder, multiplied by 100%.

$\rho_{vg}$ refers to the direct current volume resistivity at 90°C and 15 kV/mm field strength of the heterocycle grafting-modified polypropylene material product, $\rho_{vg}/\rho_v$ refers to a ratio of the direct current volume resistivity $\rho_{vg}$ at 90°C and 15 kV/mm field strength of the heterocycle grafting-modified polypropylene material product to the direct current volume resistivity $\rho_v$ at 90°C and 15 kV/mm field strength of the basic polypropylene copolymer powder.

By comparing the data of Example 1A and Comparative Example 1A, it can be seen that the use of T30S powder as the base powder results in a polypropylene-g-styrene material product with too high flexural modulus and poor mechanical properties, which cannot meet the processing requirements of insulating materials.

By comparing the data of Example 1A and Comparative Example 2A, it can be seen that an excessive addition of a styrenic monomer (too high M1 value) results in a great reduction of the elongation at break of the obtained polypropylene-g-styrene material product, affecting the mechanical properties of the material, and a reduction of the breakdown field strength and the volume resistivity of the material, affecting the electrical properties of the material.

By comparing the data of Example 1A and Comparative Example 3A, it can be seen that the manner of blending polystyrene results in a great reduction of the breakdown field strength and the volume resistivity of the material, greatly affecting the electrical properties of the material.

In conclusion, as can be seen from the data in Table 1, the aromatic olefin grafting-modified polypropylene material of the invention has good mechanical properties due to a great reduction of the flexural modulus, and the breakdown field strengths of the graft products are all improved compared with the polypropylene copolymer non-grafted with the styrenic monomer, which indicates that the aromatic olefin grafting-modified polypropylene material of the invention has good electrical properties at the same time.

By comparing the data of Example 1B and Comparative Example 1B, it can be seen that the use of T30S powder as the base powder results in a polypropylene-g-silane material product with too high flexural modulus and poor mechanical properties, which cannot meet the processing requirements of insulating materials.

By comparing the data of Example 1B and Comparative Example 2B, it can be seen that an excessive addition of an alkenyl-containing silane monomer (too high M1 value) results in a reduction of the breakdown field strength and the volume resistivity of the obtained polypropylene-g-silane material product, affecting the electrical properties of the product.

By comparing the data of Example 1B and Comparative Example 3B, it can be seen that the manner of blending polyvinyltriethoxysilane results in a great reduction of the breakdown field strength and the volume resistivity of the product, greatly affecting the electrical properties of the product.

In conclusion, as can be seen from the data in Table 2, the silane-modified polypropylene graft of the invention has good mechanical properties due to a great reduction of the flexural modulus, and the breakdown field strengths of the graft products are all improved compared with the polypropylene copolymer non-grafted with the alkenyl-containing silane monomer, which indicates that the silane-modified polypropylene graft of the invention has good electrical properties at the same time.

By comparing the data of Example 1C and Comparative Example 1C, it can be seen that the use of T30S powder as the base powder results in a polypropylene-g-acrylate material product with too high flexural modulus and poor mechanical properties, which cannot meet the processing requirements of insulating materials.

By comparing the data of Example 1C and Comparative Example 2C, it can be seen that an excessive addition of an acrylate monomer (too high M1 value) results in a reduction of the breakdown field strength and the volume resistivity of the obtained polypropylene-g-acrylate material product, affecting the electrical properties of the product.

By comparing the data of Example 1C and Comparative Example 3C, it can be seen that the manner of blending acrylate polymer results in a great reduction of the breakdown field strength and the volume resistivity of the product, greatly affecting the electrical properties of the product.

In conclusion, as can be seen from the data in Table 3, the grafting-modified polypropylene material of the invention has good mechanical properties due to a great reduction of the flexural modulus, and the breakdown field strengths of the graft products are all improved compared with the polypropylene copolymer non-grafted with the acrylate monomer and the optional acrylic monomer, which indicates that the grafting-modified polypropylene material of the invention has good electrical properties at the same time.

By comparing the data of Example 1D and Comparative Example 1D, it can be seen that the use of T30S powder as the base powder results in a polypropylene-g-heterocyclic material product with too high flexural modulus and poor mechanical properties, which cannot meet the processing requirements of insulating materials.

By comparing the data of Example 1D and Comparative Example 2D, it can be seen that an excessive addition of a heterocyclic monomer (too high M1 value) results in a great reduction of the breakdown field strength and the volume resistivity of the obtained polypropylene-g-heterocyclic material product, affecting the electrical properties of the product

By comparing the data of Example 1D and Comparative Example 3D, it can be seen that the manner of blending heterocyclic polymer results in a great reduction of the breakdown field strength and the volume resistivity of the product, greatly affecting the electrical properties of the product.

In conclusion, as can be seen from the data in Table 4, the heterocycle grafting-modified polypropylene material of the invention has good mechanical properties due to a great reduction of the flexural modulus, and the breakdown field strengths of the graft products are all improved compared with the polypropylene copolymer non-grafted with the heterocyclic monomer, which indicates that the heterocycle grafting-modified polypropylene material of the invention has good electrical properties at the same time.

In addition, as can be seen from the dielectric constant and dielectric loss data, the graft modification does not affect the dielectric constant and dielectric loss of the material, and the material of the invention satisfies the necessary conditions for insulation.

## Example A0

Preparation of a conductor: subjecting multiple aluminum monofilament conductors to a wire bundling operation, and then subjecting each bundled monofilament conductor to a stranding operation, to obtain an aluminum conductor inner core.

Preparation of aromatic olefin-modified polypropylene particles: blending the following components in parts by mass: 100 parts of the aromatic olefin-modified polypropylene materials obtained in Example A1, Example A3, Example A5, Example A7 and Example A8, and 0.3 part of antioxidant 1010/168/calcium stearate (mass ratio: 2: 2: 1); granulating by a twin-screw extruder at the rotation speed of 300 r/min and the granulation temperature of 210-230°C.

Preparation of a conductor shielding layer and an electrically insulating layer: co-extrusion coating the conductor shielding material PSD WMP-00012 (Zhejiang Wanma Co., Ltd.) and the above aromatic olefin-modified polypropylene particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 160-220°C.

Preparation of a metal shielding layer: winding a copper strip outside the electrically insulating layer (the electrically insulating shielding layer) with T1 copper to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor with a nominal diameter of 1.25 mm using 304 stainless steel, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the thermoplastic insulating layer was finally obtained. The schematic cross-sectional view of the cable is shown in Figure 1.

According to the above method, cables with energy levels in the range of 6-35 kV were prepared based on the materials of Example A1, Example A3, Example A5, Example A7 and Example A8 respectively, the sectional area of the conductor in the cables was 240-400 $mm^2$, the thickness of the conductor shielding layer was 1-3 mm, the thickness of the electrically insulating layer was 2-8 mm, the thickness of the electrically insulating shielding layer was 0.5-1.5 mm, the thickness of the armor was 0.5-1 mm, the thickness of the inner sheath layer was 1-2 mm, and the thickness of the outer sheath layer was not less than 1.8 mm.

## Test Example A0

The prepared cables were tested. The main insulation conductivity test result of the cables: the conductivity ratio of each cable at 90°C and 30°C was less than 100. The insulation space charge injection test result of the cables: the electric field distortion rate of each cable was less than 20%. The direct current withstand voltage test result: each cable had no breakdown and discharge phenomena, denoting pass. The load cycle test result: each cable had no breakdown phenomenon, denoting pass.

## Example B0

Preparation of a conductor: subjecting multiple aluminum monofilament conductors to a wire bundling operation, and then subjecting each bundled monofilament conductor to a stranding operation, to obtain an aluminum conductor inner core.

Preparation of alkenyl-containing silane-modified polypropylene particles: blending the following components

in parts by mass: 100 parts of the alkenyl-containing silane-modified polypropylene materials obtained in Examples B1-B4 and Examples B6-B7, and 0.3 part of antioxidant 1010/168/calcium stearate (mass ratio: 2: 2: 1); granulating by a twin-screw extruder at the rotation speed of 300 r/min and the granulation temperature of 210-230°C.

Preparation of a conductor shielding layer and an electrically insulating layer: co-extrusion coating the conductor shielding material PSD WMP-00012 (Zhejiang Wanma Co., Ltd.) and the above alkenyl-containing silane-modified polypropylene particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 160-220°C.

Preparation of a metal shielding layer: winding a copper strip outside the electrically insulating layer (the electrically insulating shielding layer) with T1 copper to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor with a nominal diameter of 1.25 mm using 304 stainless steel, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the modified polypropylene thermoplastic insulating layer was finally obtained. The schematic cross-sectional view of the cable is shown in Figure 1.

According to the above method, cables with energy levels in the range of 6-35 kV were prepared based on the materials of Example B1-B4 and Example B6-B7 respectively, the sectional area of the conductor in the cables was 240-400 $mm^2$, the thickness of the conductor shielding layer was 1-3 mm, the thickness of the electrically insulating layer was 2-8 mm, the thickness of the electrically insulating shielding layer was 0.5-1.5 mm, the thickness of the armor was 0.5-1 mm, the thickness of the inner sheath layer was 1-2 mm, and the thickness of the outer sheath layer was not less than 1.8 mm.

## Test Example B0

The prepared cables were tested. The main insulation conductivity test result of the cables: the conductivity ratio of each cable at 90°C and 30°C was less than 100. The insulation space charge injection test result of the cables: the electric field distortion rate of each cable was less than 20%. The direct current withstand voltage test result: each cable had no breakdown and discharge phenomena, denoting pass. The load cycle test result: each cable had no breakdown phenomenon, denoting pass.

## Example C0

Preparation of a conductor: subjecting multiple aluminum monofilament conductors to a wire bundling operation, and then subjecting each bundled monofilament conductor to a stranding operation, to obtain an aluminum conductor inner core.

Preparation of acrylate-modified polypropylene particles: blending the following components in parts by mass: 100 parts of the acrylate-modified polypropylene materials obtained in Example C1, Example C3, Example C5, Example C7 and Example C8, 0.3 part of antioxidant 1010/168/calcium stearate (mass ratio: 2: 2: 1) and 0.05 part of copper inhibitor MDA-5; granulating by a twin-screw extruder at the rotation speed of 300 r/min and the granulation temperature of 210-230°C.

Preparation of a conductor shielding layer and an electrically insulating layer: co-extrusion coating the conductor shielding material PSD WMP-00012 (Zhejiang Wanma Co., Ltd.) and the above acrylate-modified polypropylene particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 160-220°C.

Preparation of a metal shielding layer: winding a copper strip outside the electrically insulating layer (the electrically insulating shielding layer) with T1 copper to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor with a nominal diameter of 1.25 mm using 304 stainless steel, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the modified polypropylene insulating layer was finally obtained. The schematic cross-sectional view of the cable is shown in Figure 1.

According to the above method, cables with energy levels in the range of 6-35 kV were prepared based on the materials of Example C1, Example C3, Example C5, Example C7 and Example C8 respectively, the sectional area of the conductor in the cables was 240-400 $mm^2$, the thickness of the conductor shielding layer was 1-3 mm, the thickness of the electrically insulating layer was 2-8 mm, the thickness of the electrically insulating shielding layer was 0.5-1.5 mm, the thickness of the armor was 0.5-1 mm, the thickness of the inner sheath layer was 1-2 mm, and the thickness of the outer sheath layer was not less than 1.8 mm.

## Test Example C0

The prepared cables were tested. The main insulation conductivity test result of the cables: the conductivity ratio of each cable at 90°C and 30°C was less than 100. The insulation space charge injection test result of the cables: the electric field distortion rate of each cable was less than 20%. The direct current withstand voltage test result: each cable had no breakdown and discharge phenomena, denoting pass. The load cycle test result: each cable had no breakdown phenomenon, denoting pass.

## Example D0

Preparation of a conductor: subjecting multiple aluminum monofilament conductors to a wire bundling operation, and then subjecting each bundled monofilament conductor to a stranding operation, to obtain an aluminum conductor inner core.

Preparation of heterocycle grafting-modified polypropylene material particles: blending the following components in parts by mass: 100 parts of the heterocycle grafting-modified polypropylene materials obtained in Example D2, Example D3, Example D5 and Example D7, and 0.3 part of antioxidant 1010/168/calcium stearate (mass ratio: 2: 2: 1); granulating by a twin-screw extruder at the rotation speed of 300 r/min and the granulation temperature of 210-230°C.

Preparation of a conductor shielding layer and an electrically insulating layer: co-extrusion coating the conductor shielding material PSD WMP-00012 (Zhejiang Wanma Co., Ltd.) and the above heterocycle grafting-modified polypropylene material particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 160-210°C.

Preparation of a metal shielding layer: winding a copper strip outside the electrically insulating layer (the electrically insulating shielding layer) with T1 copper to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor with a nominal diameter of 1.25 mm using 304 stainless steel, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the high-performance polypropylene thermoplastic insulating layer was finally obtained. The schematic cross-sectional view of the cable is shown in Figure 1.

According to the above method, cables with energy levels in the range of 6-35 kV were prepared based on the materials of Example D2, Example D3, Example D5 and Example D7 respectively, the sectional area of the conductor in the cables was 240-400 $mm^2$, the thickness of the conductor shielding layer was 1-3 mm, the thickness of the electrically insulating layer was 2-8 mm, the thickness of the electrically insulating shielding layer was 0.5-1.5 mm, the thickness of the armor was 0.5-1 mm, the thickness of the inner sheath layer was 1-2 mm, and the thickness of the outer sheath layer was not less than 1.8 mm.

## Test Example D0

The prepared cables were tested. The main insulation conductivity test result of the cables: the conductivity ratio of each cable at 90°C and 30°C was less than 100. The insulation space charge injection test result of the cables: the electric field distortion rate of each cable was less than 20%. The direct current withstand voltage test result: each cable had no breakdown and discharge phenomena, denoting pass. The load cycle test result: each cable had no breakdown phenomenon, denoting pass.

## Example A

Preparation of a conductor: subjecting seventy-six aluminum monofilaments with a diameter of 2.5 mm to a compaction stranding operation, to obtain an aluminum conductor inner core.

Preparation of aromatic olefin-modified polypropylene particles: blending the following components in parts by mass: 100 parts of the aromatic olefin-modified polypropylene material obtained in Example 2A, and 0.3 part of antioxidant 1010/168/calcium stearate (mass ratio: 2: 2: 1); granulating by a twin-screw extruder at the rotation speed of 300 r/min and the granulation temperature of 210-230°C.

Preparation of a conductor shielding layer and an electrically insulating layer: co-extrusion coating the conductor shielding material PSD WMP-00012 (Zhejiang Wanma Co., Ltd.) and the above aromatic olefin-modified polypropylene particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 190-220°C.

Preparation of a metal shielding layer: winding a copper wire outside the electrically insulating layer (the electrically insulating shielding layer) with twenty-five T1 copper wires with a diameter of 0.3 mm to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor using fifty 304 stainless steel wires with a diameter of 6.0 mm, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the thermoplastic insulating layer was finally obtained. The schematic cross-sectional view of the cable is shown in Figure 1.

According to the above method, a cable with an energy level of 10 kV was prepared based on the material of Example 2A, the sectional area of the conductor in the cable was 400 $mm^2$, the average thickness of the conductor shielding layer was 1.04 mm, the average thickness of the electrically insulating layer was 2.53 mm, the average thickness of the electrically insulating shielding layer was 1.05 mm, the average thickness of the metal shielding layer was 0.92 mm, the cable insulation eccentricity was 5.1%, the average thickness of the armor was 6.00 mm, the average thickness of the inner sheath layer was 1.80 mm, and the average thickness of the outer sheath layer was 2.45 mm.

## Test Example A

The prepared cable was tested. The main insulation conductivity test result of the cable: the conductivity ratio of the cable at 90°C and 30°C was 47.5. The insulation space charge injection test result of the cable: the electric field distortion rate of the cable was 18.3%. The direct current withstand voltage test result: the cable had no breakdown and discharge phenomena, denoting pass. The load cycle test result: the cable had no breakdown phenomenon, denoting pass.

## Example B

Preparation of a conductor: subjecting seventy-six aluminum monofilaments with a diameter of 2.5 mm to a compaction stranding operation, to obtain an aluminum conductor inner core.

Preparation of alkenyl-containing silane-modified polypropylene particles: blending the following components in parts by mass: 100 parts of the alkenyl-containing silane-modified polypropylene material obtained in Example 5B, and 0.3 part of antioxidant 1010/168/calcium stearate (mass ratio: 2: 2: 1); granulating by a twin-screw extruder at the rotation speed of 300 r/min and the granulation temperature of 210-230°C.

Preparation of a conductor shielding layer and an electrically insulating layer: co-extrusion coating the conductor shielding material PSD WMP-00012 (Zhejiang Wanma Co., Ltd.) and the above alkenyl-containing silane-modified polypropylene particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 190-220°C.

Preparation of a metal shielding layer: winding a copper wire outside the electrically insulating layer (the electrically insulating shielding layer) with twenty-five T1 copper wires with a diameter of 0.3 mm to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor using fifty 304 stainless steel wires with a diameter of 6.0 mm, and winding a single-layer armor leftward on the inner sheath layer, where the armor should be tight, so that

the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the modified polypropylene thermoplastic insulating layer was finally obtained. The schematic cross-sectional view of the cable is shown in Figure 1.

According to the above method, a cable with an energy level of 10 kV was prepared based on the material of Example 5B, the sectional area of the conductor in the cable was 400 $mm^2$, the average thickness of the conductor shielding layer was 1.05 mm, the average thickness of the electrically insulating layer was 2.95 mm, the average thickness of the electrically insulating shielding layer was 1.18 mm, the average thickness of the metal shielding layer was 0.95 mm, the cable insulation eccentricity was 5.2%, the average thickness of the armor was 5.95 mm, the average thickness of the inner sheath layer was 2.44 mm, and the average thickness of the outer sheath layer was 2.80 mm.

## Test Example B

The prepared cable was tested. The main insulation conductivity test result of the cable: the conductivity ratio of the cable at 90°C and 30°C was 56.8. The insulation space charge injection test result of the cable: the electric field distortion rate of the cable was 17.5%. The direct current withstand voltage test result: the cable had no breakdown and discharge phenomena, denoting pass. The load cycle test result: the cable had no breakdown phenomenon, denoting pass.

## Example C

Preparation of a conductor: subjecting seventy-six copper monofilaments with a diameter of 2.5 mm to a compaction stranding operation, to obtain a copper conductor inner core.

Preparation of acrylate-modified polypropylene particles: blending the following components in parts by mass: 100 parts of the modified polypropylene material obtained in Example 2C, and 0.3 part of antioxidant 1024; granulating by a twin-screw extruder at the rotation speed of 300 r/min and the granulation temperature of 210-230°C.

Preparation of a conductor shielding layer and an electrically insulating layer: co-extrusion coating the conductor shielding material PSD WMP-00012 (Zhejiang Wanma Co., Ltd.) and the above modified polypropylene particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 190-220°C.

Preparation of a metal shielding layer: winding a copper wire outside the electrically insulating layer (the electrically insulating shielding layer) with twenty-five T1 copper wires with a diameter of 0.3 mm to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor using fifty 304 stainless steel wires with a diameter of 6.0 mm, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the modified polypropylene insulating layer was finally obtained. The schematic cross-sectional view of the cable is shown in Figure 1.

According to the above method, a cable with an energy level of 10 kV was prepared based on the material of Example 2C, the sectional area of the conductor in the cable was 400 $mm^2$, the average thickness of the conductor shielding layer was 1.19 mm, the average thickness of the electrically insulating layer was 2.96 mm, the average thickness of the electrically insulating shielding layer was 1.06 mm, the average thickness of the metal shielding layer was 0.94 mm, the cable insulation eccentricity was 4.9%, the average thickness of the armor was 5.93 mm, the average thickness of the inner sheath layer was 2.07 mm, and the average thickness of the outer sheath layer was 2.75 mm.

## Test Example C

The prepared cable was tested. The main insulation conductivity test result of the cable: the conductivity ratio of the cable at 90°C and 30°C was 69.4. The insulation space charge injection test result of the cable: the electric field distortion rate of the cable was 18.6%. The direct current withstand voltage test result: the cable had no breakdown and discharge phenomena, denoting pass. The load cycle test result: the cable had no breakdown phenomenon, denoting pass.

## Example D

Preparation of a conductor: subjecting seventy-six aluminum monofilaments with a diameter of 2.5 mm to a compaction stranding operation, to obtain an aluminum conductor inner core.

Preparation of heterocycle grafting-modified polypropylene material particles: blending the following components in parts by mass: 100 parts of the heterocycle grafting-modified polypropylene material obtained in Example 1D, and 0.3 part of antioxidant 1035; granulating by a twin-screw extruder at the rotation speed of 300 r/min and the granulation temperature of 210-230°C.

Preparation of a conductor shielding layer and an electrically insulating layer: co-extrusion coating the conductor shielding material PSD WMP-00012 (Zhejiang Wanma Co., Ltd.) and the above heterocycle grafting-modified polypropylene material particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 190-210°C.

Preparation of a metal shielding layer: winding a copper wire outside the electrically insulating layer (the electrically insulating shielding layer) with twenty-five T1 copper wires with a diameter of 0.3 mm to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor using fifty 304 stainless steel wires with a diameter of 6.0 mm, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the high-performance polypropylene insulating layer was finally obtained. The schematic cross-sectional view of the cable is shown in Figure 1.

According to the above method, a cable with an energy level of 10 kV was prepared based on the material of Example 1D, the sectional area of the conductor in the cable was 400 $mm^2$, the average thickness of the conductor shielding layer was 1.07 mm, the average thickness of the electrically insulating layer was 2.64 mm, the average thickness of the electrically insulating shielding layer was 1.00 mm, the average thickness of the metal shielding layer was 1.00 mm, the cable insulation eccentricity was 5.4%, the average thickness of the armor was 5.94 mm, the average thickness of the inner sheath layer was 2.25 mm, and the average thickness of the outer sheath layer was 2.40 mm.

## Test Example D

The prepared cable was tested. The main insulation conductivity test result of the cable: the conductivity ratio of the cable at 90°C and 30°C was 52.1. The insulation space charge injection test result of the cable: the electric field distortion rate of the cable was 16.2%. The direct current withstand voltage test result: the cable had no breakdown and discharge phenomena, denoting pass. The load cycle test result: the cable had no breakdown phenomenon, denoting pass.

It can be seen that, compared with the existing cable, the cable comprising the grafting-modified polypropylene material of the invention as the main insulating layer has higher working temperature, and can still maintain and even have higher volume resistivity and stronger breakdown resistance at higher working temperature. Under the condition of ensuring the same voltage grade and insulation level, compared with the electrically insulating layer of conventional cable, the electrically insulating layer made of the grafting-modified polypropylene material has the advantages of thinner thickness, better heat dissipation and smaller weight.

The examples of the invention have been described above, the above description is exemplary, not exhaustive, and the invention is not limited to the examples. Without departing from the scope and spirit of the examples, many modifications and changes are obvious to those of ordinary skill in the art.

The endpoints of ranges and any values disclosed herein are not to be limited to the precise ranges or values, which are to be understood to encompass values close to those ranges or values. For numerical ranges, the endpoints of each range, the endpoints of each range and the individual point values, as well as the individual point values may be combined with each other to yield one or more new numerical ranges, which numerical ranges should be deemed to be specifically disclosed herein.

## Claims

1. A grafting-modified polypropylene material for an insulating material, **characterized in that**, the grafting-modified polypropylene material comprises structural units derived from a polypropylene copolymer and structural units derived from an alkenyl-containing polymerizable monomer; the content of the structural units derived from the alkenyl-containing polymerizable monomer and in a grafted state in the grafting-modified polypropylene material is 0.1 to 14 wt%, preferably 0.2 to 7.5 wt%, based on the weight of the grafting-modified polypropylene material;
the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

**2.** The grafting-modified polypropylene material as claimed in claim 1, wherein, the polypropylene copolymer has at least one of the following characteristics: the melt flow rate under a load of 2.16 kg at 230°C is 0.01 to 60 g/10 min, preferably 0.05 to 35 g/10 min, and more preferably 0.5 to 15 g/10 min; the melting temperature Tm is 100°C or higher, preferably 110 to 180°C, more preferably 110 to 170°C, more further preferably 120 to 170°C, and still more further preferably 120 to 166°C; the weight average molecular weight is preferably $20\times10^4$ to $60\times10^4$ g/mol.

**3.** The grafting-modified polypropylene material as claimed in claim 1 or 2, wherein, the comonomer of the polypropylene copolymer is at least one selected from $C_2$-$C_8$ alpha-olefins other than propylene; preferably, the comonomer of the polypropylene copolymer is at least one selected from ethylene, 1-butene, 1-pentene, 4-methyl-1-pentene, 1-hexene, 1-heptene and 1-octene; further preferably, the comonomer of the polypropylene copolymer is ethylene and/or 1-butene; and still further preferably, the polypropylene copolymer consists of propylene and ethylene.

**4.** The grafting-modified polypropylene material as claimed in any one of claims 1-3, wherein, the grafting-modified polypropylene material is prepared by a solid phase grafting reaction of a polypropylene copolymer and an alkenyl-containing polymerizable monomer.

**5.** The grafting-modified polypropylene material as claimed in any one of claims 1-4, wherein, the grafting-modified polypropylene material has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1250 MPa, preferably 20 to 1000 MPa, and more preferably 50 to 600 MPa; the elongation at break is $\geq$ 200%, preferably $\geq$ 300%.

**6.** The grafting-modified polypropylene material as claimed in any one of claims 1-5, wherein, the grafting-modified polypropylene material has at least one of the following characteristics:

- the working temperature of the grafting-modified polypropylene material is $\geq$ 90°C, and preferably 90 to 160°C;
- the breakdown field strength $E_g$ at 90°C of the grafting-modified polypropylene material is $\geq$ 180 kV/mm, and preferably 180 to 800 kV/mm;
- the breakdown field strength change rate $\Delta E/E$, which is the difference $\Delta E$ between the breakdown field strength $E_g$ at 90°C of the grafting-modified polypropylene material and the breakdown field strength E at 90°C of the polypropylene copolymer divided by the breakdown field strength E at 90°C of the polypropylene copolymer, is greater than 0.7%, preferably 0.8 to 50%, more preferably 2 to 35%, and further preferably 5 to 25%;
- the direct current volume resistivity $\rho_{vg}$ at 90°C and 15 kV/mm field strength of the grafting-modified polypropylene material is $\geq 6\times10^{12}$ Ω.m, preferably $6\times10^{12}$ Ω.m to $1.0\times10^{20}$ Q.m;

  - the ratio $\rho_{vg}/\rho_v$ of the direct current volume resistivity $\rho_{vg}$ at 90°C and 15 kV/mm field strength of the grafting-modified polypropylene material to the direct current volume resistivity $\rho_v$ at 90°C and 15 kV/mm field strength of the polypropylene copolymer is greater than 1, preferably 1.1 to 50, more preferably 1.15 to 20, and further preferably 1.2 to 10.

**7.** The grafting-modified polypropylene material as claimed in any one of claims 1-6, wherein, the alkenyl-containing polymerizable monomer is at least one selected from a monomer having the structure represented by formula 1,

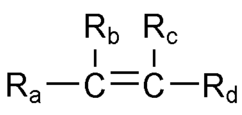 formula 1

in the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl.

**8.** The grafting-modified polypropylene material as claimed in claim 7, wherein, $R_b$, $R_c$, $R_d$ are each independently selected from H, substituted or unsubstituted $C_1$-$C_6$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano, substituted or unsubstituted $C_3$-$C_{20}$ silyl; the substituent group is halogen, hydroxy, amino, $C_1$-$C_{12}$ alkyl, $C_3$-$C_6$ cycloalkyl, $C_1$-$C_{12}$ alkoxy, $C_1$-$C_{12}$ acyloxy.

**9.** The grafting-modified polypropylene material as claimed in claim 7, wherein, $R_b$, $R_c$, $R_d$ are each independently selected from H, substituted or unsubstituted $C_1$-$C_6$ alkyl;
$R_a$ is selected from a group represented by formula 2, a group represented by formula 3, a group represented by formula 4, a group represented by formula 5, a group represented by formula 6, a combination of a group represented by formula 6 and a group represented by formula 7, a heterocyclic group;

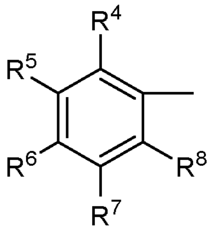

formula 2

in the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

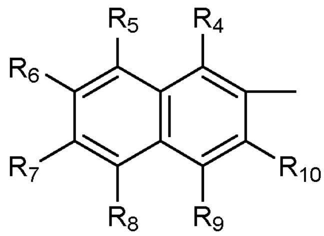

formula 3

in the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

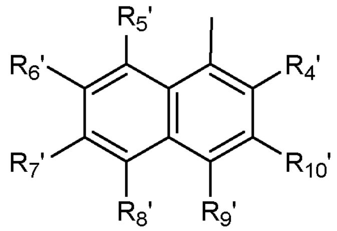

formula 4

in the formula 4, $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

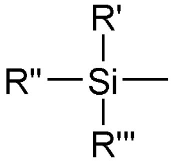

formula 5

in the formula 5, R', R", R‴ are each independently selected from substituted or unsubstituted $C_1$-$C_{12}$ linear alkyl, substituted or unsubstituted $C_3$-$C_{12}$ branched alkyl, substituted or unsubstituted $C_1$-$C_{12}$ alkoxy, substituted or unsubstituted $C_1$-$C_{12}$ acyloxy; preferably, $R_1$ is $C_2$-$C_6$ alkenyl, preferably monounsaturated alkenyl; $R_2$, $R_3$, $R_4$ are each independently selected from substituted or unsubstituted $C_1$-$C_6$ linear alkyl, substituted or unsubstituted $C_3$-$C_6$ branched alkyl, substituted or unsubstituted $C_1$-$C_6$ alkoxy, substituted or unsubstituted $C_1$-$C_6$ acyloxy;

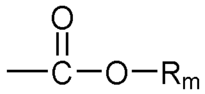 formula 6 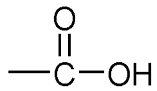 formula 7

in the formula 6, $R_m$ is selected from the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxy;
the heterocyclic group is selected from imidazolyl, pyrazolyl, carbazolyl, pyrrolidinonyl, pyridyl, piperidinyl, caprolactam group, pyrazinyl, thiazolyl, purinyl, morpholinyl, oxazolinyl.

**10.** The grafting-modified polypropylene material as claimed in claim 7, wherein, the grafting-modified polypropylene material is an aromatic olefin grafting-modified polypropylene material, the alkenyl-containing polymerizable monomer is a styrenic monomer, and the content of the structural units derived from the styrenic monomer and in a grafted state in the aromatic olefin grafting-modified polypropylene material is 0.5 to 14 wt%, preferably 1 to 7.5 wt%, and more preferably 1.5 to 5 wt%, based on the weight of the aromatic olefin grafting-modified polypropylene material;
preferably, the styrenic monomer is at least one selected from a monomer having the structure represented by formula 8, a monomer having the structure represented by formula 9 and a monomer having the structure represented by formula 10;

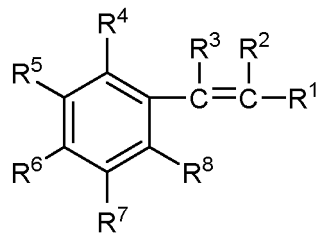

formula 8

in the formula 8, $R^1$, $R^2$, $R^3$ are each independently selected from H, substituted or unsubstituted $C_1$-$C_6$ alkyl; $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^1$, $R^2$, $R^3$ are each independently selected from H, substituted or unsubstituted $C_1$-$C_3$ alkyl, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

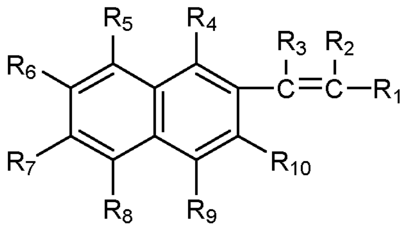

formula 9

in the formula 9, $R_1$, $R_2$, $R_3$ are each independently selected from H, substituted or unsubstituted $C_1$-$C_6$ alkyl; $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_1$, $R_2$, $R_3$ are each independently selected from H, substituted or unsubstituted $C_1$-$C_3$ alkyl, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

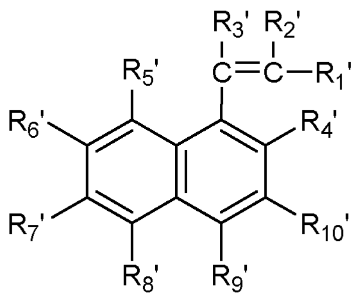

formula 10

in the formula 10, $R_1$', $R_2$', $R_3$' are each independently selected from H, substituted or unsubstituted $C_1$-$C_6$ alkyl; $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_1$', $R_2$', $R_3$' are each independently selected from H, substituted or unsubstituted $C_1$-$C_3$ alkyl, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

preferably, the styrenic monomer is at least one selected from styrene, α-methylstyrene, 1-vinyl naphthalene, 2-vinyl naphthalene, mono- or polysubstituted styrene, mono- or polysubstituted α-methylstyrene, mono- or polysubstituted 1-vinyl naphthalene and mono- or polysubstituted 2-vinyl naphthalene; the substituent group preferably is at least one selected from halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, $C_1$-$C_8$ linear amine group and $C_3$-$C_8$ branched amine group or cyclic amine group;
more preferably, the styrenic monomer is at least one selected from styrene, α-methylstyrene, 2-methylstyrene, 3-methylstyrene and 4-methylstyrene.

**11.** The grafting-modified polypropylene material as claimed in claim 10, wherein, the aromatic olefin grafting-modified polypropylene material has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1250 MPa, preferably 20 to 1000 MPa, and more preferably 50 to 600 MPa; the elongation at break is ≥ 200%, preferably ≥ 300%.

**12.** The grafting-modified polypropylene material as claimed in claim 10, wherein, the aromatic olefin grafting-modified polypropylene material has at least one of the following characteristics:

- the working temperature of the aromatic olefin grafting-modified polypropylene material is ≥ 90°C, and preferably 90 to 160°C;
- the breakdown field strength $E_g$ at 90°C of the aromatic olefin grafting-modified polypropylene material is ≥ 200 kV/mm, and preferably 200 to 800 kV/mm;
- the breakdown field strength change rate ΔE/E, which is the difference ΔE between the breakdown field strength $E_g$ at 90°C of the aromatic olefin grafting-modified polypropylene material and the breakdown field strength E at 90°C of the polypropylene copolymer divided by the breakdown field strength E at 90°C of the polypropylene copolymer, is a greater than 1.5%, preferably 1.6 to 40%, more preferably 5 to 30%, and further preferably 10 to 20%;
- the direct current volume resistivity $\rho_{vg}$ at 90°C and 15 kV/mm field strength of the aromatic olefin grafting-modified polypropylene material is ≥ $1.0\times10^{13}$ Q.m, preferably $1.5\times10^{13}$ Q.m to $1.0\times10^{20}$ Q.m;
- the ratio $\rho_{vg}/\rho_v$ of the direct current volume resistivity $\rho_{vg}$ at 90°C and 15 kV/mm field strength of the aromatic olefin grafting-modified polypropylene material to the direct current volume resistivity $\rho_v$ at 90°C and 15 kV/mm field strength of the polypropylene copolymer is greater than 1, preferably 1.5 to 50, more preferably 2 to 20, and further preferably 3 to 10.

**13.** A method for preparing a grafting-modified polypropylene material for an insulating material, the method comprising: subjecting a reaction mixture comprising a polypropylene copolymer and an alkenyl-containing polymerizable monomer to grafting reaction in the presence of an inert gas, to obtain the grafting-modified polypropylene material;

the conditions of the grafting reaction are such that: the content of the structural units derived from the alkenyl-containing polymerizable monomer and in a grafted state in the grafting-modified polypropylene material is 0.1 to 14 wt%, preferably 0.2 to 7.5 wt%, based on the weight of the grafting-modified polypropylene material;
the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

**14.** The method as claimed in claim 13, wherein, the polypropylene copolymer has at least one of the following characteristics: the melt flow rate under a load of 2.16 kg at 230°C is 0.01 to 60 g/10 min, preferably 0.05 to 35 g/10 min, and more preferably 0.5 to 15 g/10 min. The melting temperature Tm is 100°C or higher, preferably 110 to 180°C, more preferably 110 to 170°C, more further preferably 120 to 170°C, and still more further preferably 120 to 166°C. The weight average molecular weight is preferably $20\times10^4$ to $60\times10^4$ g/mol.

**15.** The method as claimed in claim 13 or 14, wherein, the reaction mixture further comprises a free radical initiator;

preferably, the free radical initiator is selected from a peroxide-based free radical initiator and/or an azo-based

free radical initiator;
the peroxide-based radical initiator is preferably at least one selected from the group consisting of dibenzoyl peroxide, dicumyl peroxide, di-tert-butyl peroxide, lauroyl peroxide, dodecyl peroxide, tert-butyl peroxybenzoate, diisopropyl peroxydicarbonate, tert-butyl peroxy(2-ethylhexanoate) and dicyclohexyl peroxydicarbonate; the azo-based radical initiator is preferably azobisisobutyronitrile and/or azobisisoheptonitrile.

**16.** The method as claimed in any one of claims 13-15, wherein, the reaction mixture further comprises at least one of the following components: a dispersant, an interfacial agent and an organic solvent, wherein the mass content of the dispersant is 50-300% of the mass of the polypropylene copolymer, the mass content of the interfacial agent is 1-30% of the mass of the polypropylene copolymer, and the mass content of the organic solvent is 1-35% of the mass of the polypropylene copolymer.

**17.** The method as claimed in any one of claims 13-15, wherein, the preparation method comprises the following steps:

a. placing a polypropylene copolymer in a closed reactor, followed by inert gas replacement;
b. adding a free radical initiator and an alkenyl-containing polymerizable monomer to the closed reactor, and mixing with stirring;
c. optionally adding an interfacial agent and optionally swelling the reaction system;
d. optionally adding a dispersant, and heating the reaction system to the grafting reaction temperature, to carry out the grafting reaction;
e. after the end of the reaction, optionally filtering, and drying to obtain the grafting-modified polypropylene material.

**18.** The method as claimed in any one of claims 13-15, wherein, the preparation method comprises the following steps:

a. placing a polypropylene copolymer in a closed reactor, followed by inert gas replacement;
b. mixing an organic solvent and a free radical initiator, and adding the mixture to the closed reactor;
c. removing the organic solvent;
d. adding an alkenyl-containing polymerizable monomer, optionally adding an interfacial agent, and optionally swelling the reaction system;
e. optionally adding a dispersant, and heating the reaction system to the grafting reaction temperature, to carry out the grafting reaction;
f. after the end of the reaction, optionally filtering, and drying to obtain the grafting-modified polypropylene material.

**19.** The method as claimed in any one of claims 13-18, wherein, the temperature of the grafting reaction is 30-130°C, and preferably 60-120°C; the time is 0.5-10 h, and preferably 1-5 h.

**20.** The method as claimed in any one of claims 13-19, wherein, the alkenyl-containing polymerizable monomer is at least one selected from a monomer having the structure represented by formula 1,

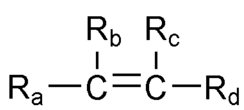
formula 1

in the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano, substituted or unsubstituted silyl.

**21.** The method as claimed in claim 20, wherein, the grafting-modified polypropylene material is an aromatic olefin grafting-modified polypropylene material, the alkenyl-containing polymerizable monomer is a styrenic monomer, and the content of the structural units derived from the styrenic monomer and in a grafted state in the aromatic olefin grafting-modified polypropylene material is 0.5 to 14 wt%, preferably 1 to 7.5 wt%, and more preferably 1.5 to 5 wt%, based on the weight of the aromatic olefin grafting-modified polypropylene material;
preferably, the styrenic monomer is at least one selected from a monomer having the structure represented by formula 8, a monomer having the structure represented by formula 9 and a monomer having the structure represented

by formula 10;

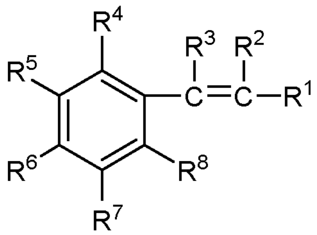

formula 8

in the formula 8, $R^1$, $R^2$, $R^3$ are each independently selected from H, substituted or unsubstituted $C_1$-$C_6$ alkyl; $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^1$, $R^2$, $R^3$ are each independently selected from H, substituted or unsubstituted $C_1$-$C_3$ alkyl, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

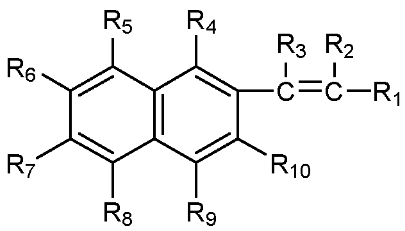

formula 9

in the formula 9, $R_1$, $R_2$, $R_3$ are each independently selected from H, substituted or unsubstituted $C_1$-$C_6$ alkyl; $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_1$, $R_2$, $R_3$ are each independently selected from H, substituted or unsubstituted $C_1$-$C_3$ alkyl, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

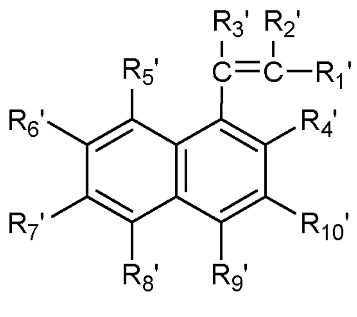

formula 10

in the formula 10, $R_1$', $R_2$', $R_3$' are each independently selected from H, substituted or unsubstituted $C_1$-$C_6$ alkyl; $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_1$', $R_2$', $R_3$' are each independently selected from H, substituted or unsubstituted $C_1$-$C_3$ alkyl, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the

substituent group is selected from halogen, hydroxy, amino, $C_1$-$C_6$ alkyl, $C_1$-$C_6$ alkoxy;

preferably, the styrenic monomer is at least one selected from styrene, α-methylstyrene, 1-vinyl naphthalene, 2-vinyl naphthalene, mono- or polysubstituted styrene, mono- or polysubstituted α-methylstyrene, mono- or polysubstituted 1-vinyl naphthalene and mono- or polysubstituted 2-vinyl naphthalene; the substituent group preferably is at least one selected from halogen, hydroxy, amino, phosphoric group, sulfonic group, $C_1$-$C_8$ linear alkyl, $C_3$-$C_8$ branched alkyl or cycloalkyl, $C_1$-$C_6$ linear alkoxy, $C_3$-$C_8$ branched alkoxy or cycloalkoxy, $C_1$-$C_8$ linear ester group, $C_3$-$C_8$ branched ester group or cyclic ester group, $C_1$-$C_8$ linear amine group and $C_3$-$C_8$ branched amine group or cyclic amine group;

more preferably, the styrenic monomer is at least one selected from styrene, α-methylstyrene, 2-methylstyrene, 3-methylstyrene and 4-methylstyrene.

**22.** The method as claimed in claim 21, wherein, the mass ratio of the free radical initiator to the styrenic monomer is 0.1-10: 100, preferably 0.5-5: 100.

**23.** The method as claimed in claim 21, wherein, the mass ratio of the styrenic monomer to the polypropylene copolymer is 0.5-16: 100, preferably 1-12: 100, and more preferably 2-10: 100.

**24.** A grafting-modified polypropylene material for an insulating material obtained by the method as claimed in any one of claims 13-23.

**25.** Use of a grafting-modified polypropylene material as claimed in any one of claim 1-12 or obtained by the method as claimed in any one of claims 13-23 as an insulating material.

**26.** The grafting-modified polypropylene material for an insulating material as claimed in any one of claim 1-12, 24, or the use as claimed in claim 25, wherein, the insulating material is a cable insulating material; preferably a direct current cable insulating material.

**27.** The grafting-modified polypropylene material for an insulating material as claimed in any one of claim 1-12, 24, or the use as claimed in claim 25, wherein, the insulating material is a cable insulating layer material.

**28.** A cable, **characterized in that** the cable comprises: at least one conductor and at least one electrically insulating layer surrounding the conductor; wherein, the material of the electrically insulating layer is at least one grafting-modified polypropylene material as claimed in any one of claim 1-12, 24.

**29.** The cable as claimed in claim 28, wherein, the cable has at least one cable core, and each cable core comprises, in order from inside to outside: a conductor, an optional conductor shielding layer, an electrically insulating layer, an optional electrically insulating shielding layer, an optional metal shielding layer.

**30.** The cable as claimed in claim 29, wherein, the cable further comprises an armor and/or a sheath layer.

**31.** The cable as claimed in claim 29, wherein, the cable further comprises a filling layer and/or a wrapping layer.

**32.** The cable as claimed in claim 28, wherein, the cable is a direct current cable or an alternating current cable; preferably the cable is a direct current cable.

**33.** An insulating material, **characterized in that** the insulating material comprises at least one grafting-modified polypropylene material as claimed in any one of claim 1-12, 24.

**34.** The insulating material as claimed in claim 33, wherein, the content of the at least one grafting-modified polypropylene material is 20 to 100 wt%, preferably 40 to 100 wt%, more preferably 60 to 100 wt%, further preferably 80 to 100 wt%, and more further preferably 90 to 100 wt%, based on the weight of the insulating material.

**35.** The insulating material as claimed in claim 33 or 34, wherein, the insulating material further comprises one or more selected from antioxidants, stabilizers, processing aids, flame retardants, water tree retarding additives, acid or ion scavengers, inorganic fillers, voltage stabilizers and copper inhibitors.

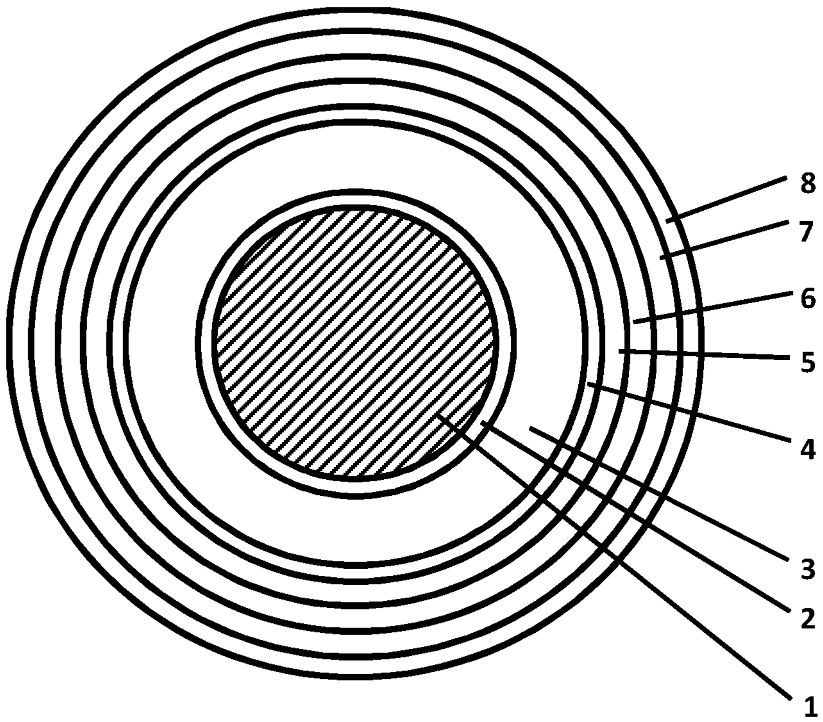


Figure 1

## INTERNATIONAL SEARCH REPORT

International application No.
**PCT/CN2020/127507**

**A. CLASSIFICATION OF SUBJECT MATTER**

C08L 23/12(2006.01)i; C08L 51/06(2006.01)i; B25G 1/12(2006.01)i

According to International Patent Classification (IPC) or to both national classification and IPC

**B. FIELDS SEARCHED**

Minimum documentation searched (classification system followed by classification symbols)

C08L23/-;C08L51/-;B25G1/-

Documentation searched other than minimum documentation to the extent that such documents are included in the fields searched

Electronic data base consulted during the international search (name of data base and, where practicable, search terms used)

CNPAT; CNKI; EPDOC; WPI; STN: 乙烯基, 绝缘, 共聚, 苯乙烯, 接枝, 聚丙烯, 电缆, 丙烯, 固相, 绝缘层, 杂环, 乙烯基萘, 硅, copolymer+, cable?, PP, wire?, graft+, vinyl, insulat+, styrene, st, polypropylene, solid, vinyl naphthalene

**C. DOCUMENTS CONSIDERED TO BE RELEVANT**

| Category* | Citation of document, with indication, where appropriate, of the relevant passages | Relevant to claim No. |
|---|---|---|
| X | CN 101080783 A (GENERAL ELECTRIC COMPANY) 28 November 2007 (2007-11-28) description page 1 paragraph 6, page 10 paragraphs 3-4, page 11 paragraph 2 | 1-35 |
| A | EP 1582562 A1 (REHAU AG. & CO.) 05 October 2005 (2005-10-05) claim 1 | 1-35 |
| A | CN 102532637 A (ZHEJIANG WANMA MACROMOLECULE MATERIAL CO., LTD.) 04 July 2012 (2012-07-04) claim 1 | 1-35 |
| A | CN 110982141 A (RESEARCH INSTITUTE OF SHAANXI YANCHANG PETROLEUM (GROUP) CO., LTD.) 10 April 2020 (2020-04-10) claim 1 | 1-35 |
| A | CN 105693936 A (FINE-BLEND COMPATILIZER JIANGSU CO., LTD.) 22 June 2016 (2016-06-22) claim 1 | 1-35 |
| A | JP 08295708 A (YAZAKI CORP.) 12 November 1996 (1996-11-12) claim 1 | 1-35 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 December 2020** | **30 December 2020** |
| Name and mailing address of the ISA/CN<br>**China National Intellectual Property Administration (ISA/CN)**<br>**No. 6, Xitucheng Road, Jimenqiao, Haidian District, Beijing 100088**<br>**China** | Authorized officer |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2020/127507**

| Patent document cited in search report | | | Publication date (day/month/year) | Patent family member(s) | | | Publication date (day/month/year) |
|---|---|---|---|---|---|---|---|
| CN | 101080783 | A | 28 November 2007 | JP | 2008524379 | A | 10 July 2008 |
| | | | | WO | 2006083358 | A2 | 10 August 2006 |
| | | | | WO | 2006083358 | A3 | 28 September 2006 |
| | | | | CN | 100573741 | C | 23 December 2009 |
| | | | | US | 2006135695 | A1 | 22 June 2006 |
| | | | | EP | 1829058 | A2 | 05 September 2007 |
| | | | | KR | 20070094788 | A | 21 September 2007 |
| EP | 1582562 | A1 | 05 October 2005 | EP | 1582562 | B1 | 09 February 2011 |
| | | | | DE | 502005010946 | D1 | 24 March 2011 |
| | | | | AT | 497994 | T | 15 February 2011 |
| | | | | DE | 102004016125 | B3 | 13 October 2005 |
| CN | 102532637 | A | 04 July 2012 | CN | 102532637 | B | 18 December 2013 |
| CN | 110982141 | A | 10 April 2020 | | None | | |
| CN | 105693936 | A | 22 June 2016 | | None | | |
| JP | 08295708 | A | 12 November 1996 | JP | 3157416 | B2 | 16 April 2001 |
| | | | | JP | H08295708 | A | 12 November 1996 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1081683
- CN 1108315
- CN 1228096
- CN 1281380
- CN 1132865 C
- CN 102020733 A
- CN 106543369 A
- CN 104499281 A
- CN 102108112 A
- CN 109251270 A
- CN 1884326 A
- CN 101492517 B
- GB 3956 T
- GB 12706 T
- GB 36822018 T
- GB 14102006 T
- GB 14082006 T
- GB 104022006 T
- GB 93412008 T
- GB 10402006 T
- GB 14092006 T
- CN 101679557 A
- CN 101058654 A